Europäisches Patentamt

European Patent Office

Office européen des brevets

(19)

(11) **EP 0 613 021 B1**

(12) **FASCICULE DE BREVET EUROPEEN**

(45) Date de publication et mention
de la délivrance du brevet:
**15.05.2002 Bulletin 2002/20**

(51) Int Cl.⁷: **G01S 5/14**, H04L 5/06

(21) Numéro de dépôt: **94460003.0**

(22) Date de dépôt: **22.02.1994**

(54) **Procédé, dispositif et émetteur de radiolocalisation utilisant un système de radiodiffusion multiporteuse**

Verfahren, Gerät und Sender zur Funkortung mittels eines Mehrträger-Funkübertragungssystems

Process, apparatus and transmitter for radiolocation utilising a multicarrier radio distribution system

(84) Etats contractants désignés:
**DE GB**

(30) Priorité: **22.02.1993 FR 9302199**

(43) Date de publication de la demande:
**31.08.1994 Bulletin 1994/35**

(73) Titulaires:
- **FRANCE TELECOM**
  **75015 Paris (FR)**
- **TELEDIFFUSION DE FRANCE SA**
  **75932 Paris Cédex 15 (FR)**

(72) Inventeurs:
- **Combelles, Pierre**
  **F-35000 Rennes (FR)**
- **Lemesle, Jean-Michel**
  **F-35700 Rennes (FR)**
- **Le Goff, Yvon**
  **F-35000 Rennes (FR)**
- **Jacquot, Dominique**
  **F-35580 Laille (FR)**

(74) Mandataire: **Vidon, Patrice**
**Cabinet Patrice Vidon**
**Le Nobel (Bât. A)**
**Technopôle Atalante**
**2, allée Antoine Becquerel**
**BP 90333**
**35703 Rennes Cedex 7 (FR)**

(56) Documents cités:
WO-A-92/13403              DE-A- 4 138 770
US-A- 5 056 106

**Description**

Le domaine de l'invention est celui de la radiolocalisation de mobiles. La radiolocalisation rassemble toutes les techniques permettant de faire le point dans un mobile, c'est-à-dire de déterminer la position de ce mobile dans l'espace à un instant donné, au moyen de liaisons radioélectriques entre le mobile et un ou plusieurs points de référence.

On connaît déjà plusieurs systèmes de radiolocalisation, qui sont essentiellement destinés à la localisation ou la navigation pour des applications maritimes et aéronautiques, tels que les systèmes DECCA, OMEGA, LORAN C, TRANSIT, GPS...

Tous ces systèmes reposent sur l'utilisation d'une infrastructure d'émission (voire dans certains cas d'émission/réception) spécifique, dédiée à un système donné. Il peut s'agir soit d'un réseau d'émetteurs terrestres (OMEGA, LORAN C), soit d'une constellation de satellites (TRANSIT, GPS).

Ces infrastructures dédiées représentent des investissements très élevés, tant en ce qui concerne l'implantation que l'entretien du réseau d'émission. Ainsi, par exemple, le système GPS (Global Positioning System) repose sur la mise en oeuvre d'une constellation de 24 satellites. Les coûts d'infrastructure englobent donc les coûts de fabrication des satellites, de mise en orbite, puis de remplacement régulier de ceux-ci.

Par ailleurs, le coût des appareils de radionavigation est également très important. En effet, outre le fait qu'ils doivent supporter au moins partiellement les coûts de l'infrastructure, ils doivent inclure des moyens de calcul et de traitement très complexes, de façon à compenser les nombreuses perturbations induites par la propagation des ondes sur de très longues distances (perturbations dues par exemple à l'environnement terrestre, la pression, la température, l'heure,...). Ils doivent aussi être équipés de moyens de réception très puissants, les émetteurs pouvant être très éloignés.

De plus, ces systèmes de radionavigation restent limités le plus souvent à une précision de l'ordre de la centaine de mètres ou, au mieux, de quelques dizaines de mètres (système GPS). Une telle précision peut être suffisante pour la localisation d'un navire en mer, ou d'un aéronef entre deux aéroports. Ces systèmes de radiolocalisation connus sont donc essentiellement destinés aux applications maritimes et aéronautiques.

Ils s'appliquent en revanche difficilement à la localisation terrestre, et notamment routière. En effet, ils sont d'un coût trop élevé pour permettre une utilisation grand public, et d'un encombrement souvent très important.

Par ailleurs, ils sont d'une précision insuffisante pour être efficace. Un système de radiolocalisation terrestre doit en effet être capable de situer un véhicule avec une précision de l'ordre de la dizaine de mètres. Par exemple, il doit pouvoir déterminer si ce véhicule est d'un côté ou d'un autre d'un carrefour (cet aspect est crucial si le dispositif de radiolocalisation est associé à des moyens de guidage).

De plus, la couverture des systèmes dédiés, qu'ils soient à base d'émetteurs terrestres ou de satellites n'est jamais continu au sol, en particulier en milieu urbain, du fait du relief et des différents obstacles à la propagation des ondes. La radiolocalisation ne peut pas être garantie, notamment en ville, alors que c'est là qu'elle présente un intérêt essentiel.

L'invention a notamment pour objectif de pallier ces différents inconvénients de l'état de la technique.

Plus précisément, un objectif de l'invention est de fournir un procédé de radiolocalisation et des récepteurs de radiolocalisation de coût de revient réduit, par rapport aux systèmes connus.

Ainsi, l'invention a pour objectif de fournir un tel procédé, qui ne nécessite pas la mise en place d'une infrastructure d'émission dédiée, ni terrestre, ni satellitaire. En d'autres termes, un objectif de l'invention est de supprimer complètement les coûts d'infrastructure des systèmes de radiolocalisation.

Un autre objectif de l'invention est de fournir des récepteurs de faible coût, compatible avec des applications grand public. L'invention a donc pour objectif de fournir de tels récepteurs ne nécessitant pas de moyens de traitement trop complexes (par exemple pour compenser les défauts de propagation des ondes sur de longues distances), et pouvant, le cas échéant, partager certains moyens, tels qu'une antenne de réception, avec d'autres dispositifs.

Ainsi, un objectif particulier de l'invention est de fournir de tels récepteurs, dont le coût soit suffisamment faible pour qu'ils puissent être implantés en grand nombre dans des véhicules automobiles.

Toujours dans le souci de l'implantation dans des automobiles, un autre objectif de l'invention est de fournir des dispositifs (ou récepteurs) de radiolocalisation d'encombrement et de poids limités, et utilisant des antennes de type classique.

L'invention a également pour objectif de fournir un procédé de radiolocalisation très précis, compatible avec des applications terrestres. En d'autres termes, un objectif de l'invention est de fournir un tel procédé permettant d'atteindre des précisions de l'ordre de quelques mètres.

Un objectif de l'invention est de fournir un tel procédé, qui permette de définir une gamme de plusieurs types de récepteurs, ayant chacun des niveaux de précision différents (et, conséquemment, des coûts de revient différents).

Un autre objectif est encore de fournir un tel procédé, qui offre une très bonne qualité de couverture, sur un territoire donné. Ainsi, l'invention a pour objectif de fournir une couverture sans interruption (ou, à tout le moins, présentant très peu d'interruptions), en particulier en milieu urbain.

Ces objectifs, ainsi que d'autres qui apparaîtront par la suite, sont atteints selon l'invention à l'aide d'un procédé de radiolocalisation d'un mobile selon la revendication 1.

Ainsi, le procédé de l'invention repose sur l'utilisation d'un réseau de radiodiffusion existant. Aucune infrastructure nouvelle n'est nécessaire. Il suffit que chaque émetteur transmette régulièrement son identifiant, ou symbole d'identification.

Les deux conditions essentielles que doit remplir le réseau de radiodiffusion sont la mise en oeuvre d'une pluralité de porteuses, et l'utilisation d'émetteurs cocanaux. Ainsi, l'invention s'applique notamment au système COFDM monofréquence.

Il est à noter que selon l'invention, les différents symboles d'identification sont transmis simultanément. Ainsi, le reste du temps, la transmission des symboles de données n'est pas perturbée.

Avantageusement, l'estimation du délai de transmission d'un symbole d'identification émis par un émetteur comprend une étape d'analyse de la réponse impulsionnelle du canal de transmission correspondant audit émetteur.

Cette analyse permet de détecter aisément le retard dû à la transmission d'un signal.

Plus précisément, l'étape d'estimation comprend, dans un mode de réalisation préférentiel de l'invention, les étapes suivantes :

- conversion analogique/numérique d'un symbole d'identification reçu, ladite conversion délivrant une série d'échantillons numériques représentatifs dudit symbole d'identification reçu ;
- transformation mathématique de ladite série d'échantillons numériques, ladite transformation mathématique délivrant une séquence d'éléments de données reçus correspondant audit symbole d'identification reçu ;

et pour chacune desdites distances entre ledit mobile et un émetteur donné :

- multiplication de ladite séquence d'éléments de données reçus par une séquence de référence, ladite séquence de référence étant connu dudit mobile et égale à la séquence inverse de la séquence correspondant au symbole d'identification dudit émetteur donné ;
- transformation mathématique inverse du résultat de ladite multiplication, ladite transformation mathématique inverse délivrant une série de pics de corrélation ;
- détection du pic de corrélation de valeur maximale dans ladite séries de pics de corrélation, la position dudit pic de valeur maximale correspondant à une estimation du délai de transmission entre ledit mobile et ledit émetteur donné ;
- détermination d'une estimation de la distance entre ledit mobile et ledit émetteur donné, à partir de ladite estimation du délai de transmission.

De façon préférentielle, lesdits symboles d'identification sont émis avec une puissance d'émission très inférieure à la puissance d'émission des autres symboles de données.

Cette condition est notamment importante dans le cas où lesdits symboles d'identification sont également des symboles de synchronisation analogique, lesdits symboles de synchronisation analogique correspondant à des débuts de trames constituées chacune d'un nombre prédéfini de symboles.

De cette façon, la détection du symbole de synchronisation (qui doit correspondre à une forte baisse du signal émis) n'est pas perturbée.

Cette méthode permet d'obtenir une précision de mesure de la distance de l'ordre de la centaine de mètres. Cette précision peut toutefois être augmentée fortement, en ajoutant une étape d'affinage de ladite estimation du délai de transmission, ladite étape d'affinage tenant compte de la valeur dudit pic de valeur maximale et de la valeur d'au moins un des pics adjacents audit pic de valeur maximale.

Préférentiellement, cette étape d'affinage comprend une étape de calcul d'un rapport pondéré de valeurs d'un jeu de pics de corrélation incluant ledit pic de valeur maximale et au moins un des pics adjacents audit pic de valeur maximale.

Par exemple, ladite étape de calcul consiste à calculer le rapport suivant:

$$r_0 = \frac{h_{n_0-1} - h_{n_0+1}}{2h_{n_0}}$$

où :

$h_{n0}$ est la valeur complexe dudit pic de corrélation de valeur maximale ;

$h_{n0-1}$ et $h_{n0+1}$ sont les valeurs complexes des deux pics de corrélation précédant et suivant respectivement le pic de valeur $h_{n0}$.

Pour améliorer encore la précision de l'estimation, il est avantageux que ladite étape d'estimation des distances comprenne une étape de limitation de l'importance du bruit de transmission perturbant lesdites estimations, consistant à supprimer le terme imaginaire dans chacune desdites estimations.

Un autre moyen de limiter l'effet du bruit est également d'inclure une étape de calcul d'une moyenne de chacune desdites estimations sur au moins deux symboles d'estimation reçus consécutifs.

De plus, on peut avantageusement prévoir une étape de soustraction systématique d'une valeur prédéfinie de limitation du biais de ladite estimation du délai de transmission, qui est préférentiellement égale à 1/12 dans le cas du rapport déjà cité.

Une précision de l'ordre de la dizaine de mètres peut alors être atteinte.

Alternativement, pour supprimer complètement le biais, le procédé peut comprendre avantageusement une étape de résolution de l'équation :

$$\frac{x}{1 - x^2} = r$$

où :

r est une première estimation dudit délai de transmission ;
x est la variable de ladite équation,

une des racines de ladite équation étant une seconde estimation dudit délai de transmission.

Par ailleurs, ladite étape de détermination d'une estimation de la localisation géographique comprend avantageusement une étape de triangulation, ladite étape de triangulation délivrant une estimation de la localisation géographique dudit mobile à partir d'estimations des distances entre ledit mobile et au moins trois émetteurs locaux distincts.

Préférentiellement, ladite étape de détermination d'une estimation de la localisation géographique comprend une étape de compensation prenant en compte au moins une des informations suivantes :

- information sur le déplacement du mobile, délivrée par au moins un capteur embarqué ;
- information cartographique, mémorisée par ledit mobile.

L'invention concerne également, bien sûr, tous les récepteurs exploitant ce procédé de radiolocalisation, ainsi que les émetteurs utilisés dans l'invention.

Il est à noter que ces émetteurs présentent une caractéristique essentielle tout à fait nouvelle par rapport aux émetteurs de radiodiffusion connus. En effet, ces derniers émettent systématiquement chacun le même signal, et l'objectif toujours visé est de faire en sorte qu'il n'y ait aucune différence entre les signaux émis, de façon à ne pas perturber la réception. Au contraire, selon l'invention, chaque émetteur fait en sorte de pouvoir être identifié.

D'autres caractéristiques et avantages de l'invention apparaîtront à la lecture de la description suivante d'un mode de réalisation de l'invention, donné à titre d'exemple illustratif et non limitatif, et des dessins annexés dans lesquels :

- la figure 1 est un schéma synoptique global d'un système de diffusion de signaux COFDM de type connu ;
- la figure 2 illustre la structure d'une trame du signal transmis dans le système de diffusion de la figure 1 ;
- la figure 3 illustre le principe de la diffusion à l'aide d'émetteurs cocanaux, selon lequel les récepteurs reçoivent simultanément des signaux similaires émis par plusieurs émetteurs
- la figure 4 présente un exemple de localisation d'un mobile dans un plan, à l'aide de trois émetteurs de référence ;
- la figure 5 est un schéma synoptique illustrant le principe général de la partie réception du procédé de radiolocalisation selon l'invention ;
- la figure 6 est un schéma synoptique d'un mode de réalisation préférentiel du procédé illustré en figure 5 ;
- la figure 7 présente un exemple de résultat de la corrélation entre un symbole d'identification reçu et un symbole d'identification connu, tel qu'il est déterminé dans le procédé illustré en figure 6 ;
- la figure 8 illustre la structure générale d'un récepteur de radiolocalisation mettant en oeuvre le procédé de la figure 6.

Ainsi qu'on l'a déjà précisé, le procédé de radiolocalisation de l'invention s'appuie donc sur un réseau de radiodiffusion multiporteuse monofréquence pour diffuser des symboles d'identification propres à chaque émetteur.

L'invention peut en particulier être mise en oeuvre à l'aide du système de diffusion numérique décrit notamment dans le brevet français FR-86 09622 déposé le 2 juillet 1986 et dans le document "Principes de modulation et de codage canal en radiodiffusion numérique vers les mobiles" (M. Alard et R. Lassalle ; Revue de l'U.E.R, n° 224, août 1987, pp. 168-190), et connu sous le nom de système COFDM (Coded Orthogonal Frequency Division Multiplex (multiplexage de fréquences orthogonales codées)).

Avant de présenter en détail un mode de réalisation préférentiel de l'invention, on rappelle tout d'abord ci-dessous à titre indicatif les caractéristiques principales de ce système de diffusion COFDM.

Il est à noter, cependant, que l'invention ne se limite en aucun cas à ce système de diffusion particulier, présenté seulement à titre d'exemple, mais peut au contraire s'appliquer à tous les systèmes de diffusion mettant en oeuvre une pluralité de fréquences porteuses (techniques FDM ou OFDM) et assurant la diffusion des signaux à l'aide de plusieurs émetteurs cocanaux.

Le système COFDM a notamment été développé dans le cadre du projet européen DAB (Digital Audio Broadcasting (diffusion audionumérique)). Il est également candidat à la normalisation pour la diffusion terrestre de la télévision numérique.

Le système COFDM repose notamment sur la combinaison de deux principes essentiels.

Le premier principe est la répartition de l'information à transmettre sur un grand nombre de porteuses modulées chacune à un faible débit, afin de réduire l'effet de sélectivité du canal de transmission (signal OFDM).

Le second principe du système COFDM consiste à corréler par un procédé de codage des éléments d'information consécutifs (codage canal) et à les transmettre en des points distants du domaine temps-fréquence (technique de l'entrelacement en temps et en fréquence). L'éloignement de ces points est choisi de façon à assurer l'indépendance statistique entre deux éléments successifs d'un signal source.

Le codage canal met en oeuvre un code convolutif. Bien que l'aspect codage canal ne se rapporte pas directement à la présente invention, on en décrit brièvement le principe, afin de présenter complètement un exemple de système de radiodiffusion pouvant mettre en oeuvre le procédé de l'invention. Il s'agit bien sûr d'un simple exemple, non limitatif.

Le procédé de modulation proprement dit de ce système connu permet de s'affranchir des problèmes liés à la sélectivité en fréquence du canal. Il consiste à assurer la répartition d'éléments numériques constitutifs du signal de données dans l'espace fréquence-temps et à émettre simultanément des jeux d'éléments numériques sur une pluralité de voies de diffusion parallèles au moyen d'un multiplex de fréquences utilisant des porteuses orthogonales. En particulier, ce type de modulation permet d'éviter que deux éléments successifs du train de données soient émis à la même fréquence.

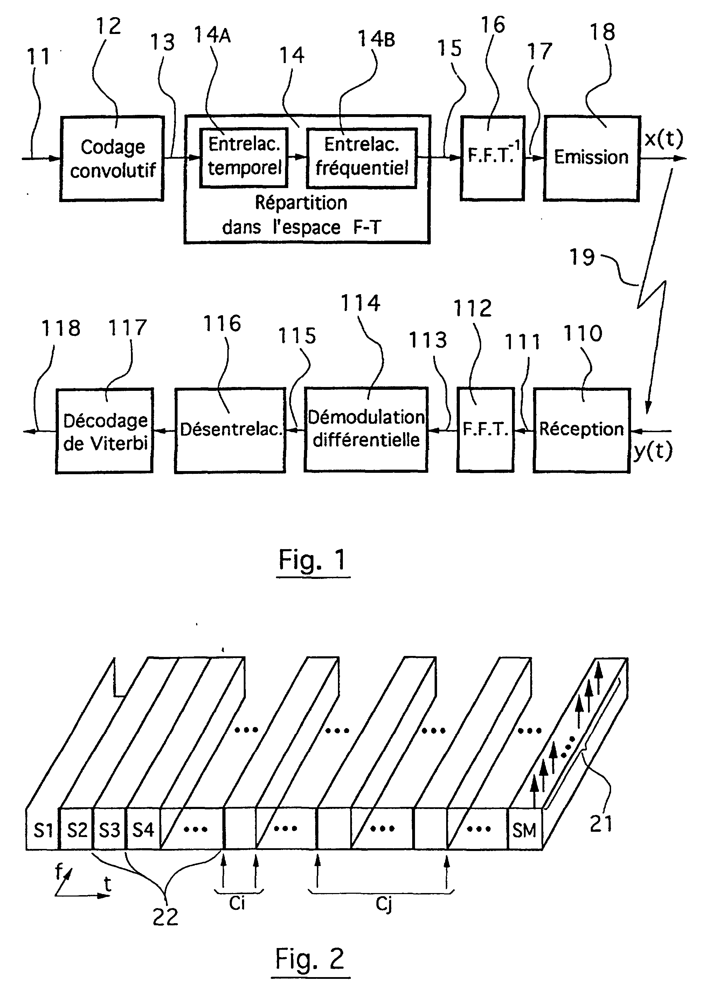

La figure 1 est donc un schéma synoptique d'une chaîne d'émission et de réception d'un système mettant en oeuvre la technique COFDM.

Ainsi, les données numériques source 11 à transmettre sont soumises à un codage convolutif 12. Le principe général d'un tel code est d'associer à chaque valeur source une valeur codée dépendante de cette valeur source et d'au moins une des valeurs qui la précède. Du fait du lien ainsi créé entre les valeurs codées, il est alors possible, au décodage, de reconstruire la séquence des valeurs source même lorsqu'une valeur codée reçue est fausse, à l'aide d'un décodage à maximum de vraisemblance, tel qu'un décodage de Viterbi à décision douce (c'est-à-dire un décodage délivrant une estimation de la valeur reçue et une pondération représentative de la confiance que l'on peut accorder à cette estimation).

Avantageusement, un code externe du type Reed-Solomon ou CSRS (Cyclotomatically Shortened Reed Solomon (code de Reed Solomon cyclotomatiquement raccourci)) peut être concaténé au code convolutif.

Les données source peuvent bien sûr être de tout type, qu'il s'agisse de signaux sonores, de signaux d'images ou de signaux de données. Elles peuvent de plus correspondre à plusieurs sources d'origines distinctes, émises simultanément. Ainsi, par exemple, la demande de brevet FR 90 16383 déposée le 19.12.1990 au nom des mêmes déposants propose une organisation des données en trames et en canaux permettant d'assurer notamment la transmission simultanée de plusieurs canaux sonores (correspondant par exemple aux canaux stéréophoniques de plusieurs stations de radio), d'images fixes ou animées, d'informations de type télétexte, de signaux de radiomessagerie, etc...

Comme on l'a déjà précisé, le système COFDM repose sur l'utilisation simultanée d'une pluralité de fréquences porteuses émises simultanément. Le nombre N de porteuses peut être quelconque. Il est classiquement de l'ordre de quelques centaines (il pourrait également être de l'ordre de quelques unités). Chacune de ces porteuses est modulée à un faible débit (par rapport au débit nécessaire pour un système monoporteuse correspondant). Cela permet de réduire l'effet de sélectivité du canal.

Le signal global émis est donc un signal large bande (occupant par exemple une bande de quelques Mégahertz).

Cette bande large est un avantage, dans le cas de systèmes conçus pour tirer parti des trajets multiples, tel que le COFDM. En effet, du fait de l'étalement de la réponse du canal de transmission, il est très improbable qu'un évanouissement profond affecte simultanément l'ensemble du signal.

A titre d'exemple, dans une bande de fréquence de 8 MHz, on peut définir 512 fréquences porteuses séparées de 15 625 Hz. Parmi celles-ci 448 sont utilisables, après élimination de la fréquence centrale du spectre et des porteuses latérales (1/8e du spectre) pour tenir compte des contraintes de filtrage.

Dans ce système COFDM, et contrairement aux méthodes classiques de multiplexage en fréquence, les spectres des différentes porteuses se recouvrent mutuellement. Toutefois, le signal complet vérifie certaines conditions d'orthogonalité, permettant la séparation des informations associées aux différentes porteuses, par exemple en utilisant la technique de la transformation de Fourier (ainsi que cela est précisé plus loin). En d'autres termes, la notion d'orthogonalité des fréquences porteuses sous-entend que les spectres des porteuses peuvent se chevaucher, à la condition que, lorsque un des spectres présente sa puissance maximale, c'est-à-dire à la fréquence précise de la porteuse correspondant à ce spectre, tous les autres spectres ont une puissance nulle. Le décodage n'est donc pas perturbé si l'on considère cette fréquence précise.

L'interférence intersymbole introduite notamment par les trajets multiples lors de la transmission peut perturber cette orthogonalité. Pour éviter ce problème, on insère un intervalle de garde (pendant lequel aucune démodulation n'est effectué) entre chaque symbole émis. La durée de cet intervalle de garde est choisie supérieure à l'étalement de la réponse impulsionnelle du canal.

Le module de codage 12 délivre des éléments de données codées $C_k$ 13 appartenant à un alphabet de modulation. Le choix de l'alphabet spécifie le type de modulation utilisé. Par exemple, pour une modulation à 4 états de phase (MDP4), l'alphabet utilisé est {1 + i, 1 - i, -1 + i, -1 - i}. De nombreux autres types de modulation peuvent être utilisés, tels que les modulations MDP8, 16QAM ou les modulations par codage en treillis selon la méthode d'Ungerboeck.

Les éléments de données codés 13 sont ensuite soumis à une opération 14 de répartition dans l'espace fréquence-temps, qui consiste à associer à chacune des fréquences porteuses des éléments de données sélectionnés dans la suite des données codées 13 de façon à briser, par brassage, la corrélation des distorsions subies par les échantillons transmis. Par espace temps-fréquence, on entend un ensemble de points répartis selon deux axes perpendiculaires, l'axe du temps et l'axe des fréquences. Selon l'axe des fréquences, on distingue autant de points qu'il y a de fréquences porteuses. Selon l'axe du temps, un point correspond à la durée d'un symbole.

Par exemple, cette répartition assure au minimum que deux données source successives ne soient pas transmises consécutivement et/ou sur une même fréquence porteuse. Plus généralement, l'éloignement dans l'espace temps-fréquence entre deux données codées successives est au minimum tel que l'indépendance statistique entre ces données soit assurée.

Dans la pratique, cette répartition 14 dans l'espace temps-fréquence peut correspondre à un entrelacement en temps $14_A$ consistant par exemple en une application sélective de retards de différentes durées, suivi d'un entrelacement en fréquences $14_B$, consistant en une affectation sélective des éléments de données retardés aux différentes porteuses.

Chaque fréquence porteuse est ensuite modulée par la séquence d'éléments de données $C_k$ qui lui est destinée. Cette opération de modulation peut être effectuée par l'application d'une transformation de Fourier rapide inverse (FFT$^{-1}$) 16 sur la suite 15 d'éléments de données.

Le module de transformation inverse 16 délivre des symboles élémentaires de modulation 17 correspondant à la modulation simultanée des N fréquences porteuses et destinés chacun à être transmis pendant l'intervalle de temps $T_s = t_s + \Delta$, où $t_s$ est la durée du symbole "utile", sur laquelle portera la démodulation et où $\Delta$ représente la durée de l'intervalle de garde (par exemple : $\Delta = T_s /4$).

Ces symboles 17 sont ensuite émis, de façon classique, à l'aide d'un module d'émission 18 classique, qui effectue notamment la conversion numérique/analogique des symboles 17, puis une transposition du signal analogique correspondant dans le domaine des radiofréquences.

Chaque symbole émis x(t) peut s'écrire :

$$x(t) = \sum_{k=0}^{N-1} Re\left(C_k \cdot e^{2i\pi f_k t}\right) \qquad pour\ t \in [0, T_s]$$

où

$$f_k = f_0 + k/t_s$$

et avec :

N :  nombre de porteuses du multiplex de porteuses orthogonales ;
$f_0$ :  fréquence arbitraire ;
$C_k$ :  élément de l'alphabet de modulation.

Le signal émis dans un canal de transmission 19 (présentant généralement des trajets multiples) est reçu dans un module de réception 110, également classique.
Si l'intervalle de garde est plus long que la réponse impulsionnelle du canal, et si celui-ci varie lentement par rapport à la durée $T_s$ d'un symbole (invariance du canal pendant la durée d'un symbole), chaque symbole reçu (non affecté par l'interférence intersymbole) peut se mettre sous la forme :

$$y(t) = \sum_{k=0}^{N-1} Re\ (H_k \cdot C_k^{\,2i\pi f_k t})$$

où $H_k$ représente la réponse du canal 19 à la fréquence $f_k$.
Dans le module de réception 110, le signal reçu est démodulé sur les voies en phase et en quadrature d'un oscillateur local de transposition à la fréquence $f_0 + 1/(2T)$ et échantillonné par un convertisseur analogique/numérique au rythme de 1/T, avec $T = t_s/N$.
Le signal 111 obtenu s'écrit :

$$x(nT) = (-1)^n \cdot \sum_{k=0}^{N-1} C_k \cdot H_k \cdot e^{\,2i\pi\frac{nk}{N}} \qquad (n = 0\ \grave{a}\ \ n-1)$$

Ce signal 111 est soumis à une transformation (FFT) 112, symétrique de la transformation inverse 16. Cette transformation 112 délivre les éléments de données 113 suivants :

$$X_k = H_k C_k = \sum_{n=0}^{N-1} (-1)^n\ z(nT) \cdot e^{\,-2i\pi\frac{nk}{N}}\ \ sur\ l'ensemble\ [(-1)^n\ z(nT)]_{n\,=\,0\,\grave{a}\,N-1}$$

Ces données 113 sont ensuite corrigées (114) (suppression du terme $H_k$) par démodulation cohérente ou différentielle. Dans le cas d'une démodulation différentielle 114, et si l'on introduit un indice temporel j sur chaque porteuse, $C_{j,k}$ est le produit d'un codage différentiel des données :

$$C_{j,k} = C_{j-1,k} \cdot D_{j,k}$$

où $D_{j,k}$ sont les données brutes. La démodulation consiste à utiliser au rang j un estimateur simplifié du canal déduit du rang j-1 :

$$\tilde{H}_{j,k} = H_{j-1,k}$$

On obtient donc les éléments de données estimées :

$$\bar{D}_{j,k} = X_{j,k} \, / \, X_{j-1,k} = C_{j,k}/C_{j-1,k}.H_{j,k}/H_{j-1,k} \approx D_{j,k}$$

Ces éléments de données 115 sont ensuite soumis à un module de désentrelacement 116, effectuant les opérations inverses du module 14, de façon à reconstituer l'ordre d'origine des symboles, qui sont ensuite dirigés dans un module de décodage 117, effectuant un décodage à maximum de vraisemblance a posteriori, tel qu'un décodage de Viterbi à décision douce.

En effet, dans la pratique, il apparaît toujours du bruit lors de la transmission des signaux. Le signal reçu doit donc alors s'écrire :

$$X_{j,k} = H_{j,k} \cdot C_{j,k} + N_{j,k}$$

où $N_{j,k}$ est un bruit gaussien complexe dont chaque composante possède une variance $\sigma^2_{j,k}$.

Le décodage selon le critère de maximum de vraisemblance a posteriori consiste alors à minimiser l'expression :

$$\sum_j \sum_k \| X_{j,k} - H_{j,k} \cdot C_{j,k} \|^2 \, / \, (2.\sigma^2_{j,k})$$

Le module de décodage fournit ainsi, après un éventuel décodage du code concaténé, si un tel code a été mis en oeuvre à l'émission, le signal 118 correspondant au signal source 11.

Dans le système COFDM, les symboles transmis sont avantageusement organisés en trames de symboles. La figure 2 présente, à titre d'exemple, une telle structure. Plus précisément, la figure 2 illustre une trame constituée de M symboles successifs.

Chaque trame débute avantageusement par deux ou trois symboles particuliers S1 à S3, dont le rôle est précisé par la suite. Elle comprend ensuite un certain nombre de symboles utiles S4 à SM, comprenant chacun N porteuses orthogonales modulées 21.

Le symbole S1 est un symbole nul (aucun signal n'est émis pendant la durée de ce symbole), permettant d'une part d'effectuer une synchronisation analogique, et d'autre part d'effectuer l'analyse spectrale des brouilleurs éventuels. Le symbole S2 est un second symbole de synchronisation constitué par un multiplex de toutes les fréquences porteuses modulées par des symboles fixés. Il permet entre autres de recaler plus précisément la synchronisation par analyse de la réponse impulsionnelle du canal. Le rôle et le mode de réalisation de ces symboles S1 et S2 sont décrits dans le brevet FR 88 15216, déposé le 18.11.88, au nom des mêmes déposants.

Bien sûr, ces symboles de synchronisation ne sont pas obligatoires vis-à-vis de l'invention.

De façon optionnelle, les trames peuvent comprendre un symbole S3 est quant à lui un symbole de vobulation, donnant une référence de phase pour la démodulation de chaque porteuse des symboles suivants, lorsque celles-ci sont modulées différentiellement.

Un des avantages essentiels du système COFDM est que les récepteurs ne sont pas perturbés par les échos du signal reçus. Au contraire, ils en tirent avantage.

On rappelle en effet que ce système a été conçu notamment pour permettre la réception de signaux numériques dans des mobiles, même, et en particulier, dans des milieux de transmission particulièrement hostiles, tels que les milieux urbains.

Ainsi, le système COFDM fonctionne dans des canaux affectés de trajets multiples, dus à la présence d'obstacles naturels (édifices, arbres, véhicules, ...). De tels canaux peuvent être modélisés par une distribution de Rayleigh ou une distribution de Rice-Nagakami (si un trajet prédomine).

En d'autres termes, les récepteurs doivent comprendre des moyens de reconstitution des données numériques émises, compensant les problèmes dus aux perturbations, et notamment aux échos induits par le canal de transmission.

Dans le cas du système COFDM, ce résultat est atteint notamment grâce à l'entrelacement en temps et en fréquence (diversité en fréquence), à l'utilisation d'un codage convolutif et à la présence d'un intervalle de garde entre deux symboles de données consécutifs.

Dans un tel système de diffusion, l'existence de trajets multiples apparaît être en fait généralement un avantage, les récepteurs prenant en compte et exploitant les contributions correspondant à chacun de ces trajets.

Cette caractéristique avantageuse permet par ailleurs la mise en oeuvre de réseaux de diffusion monofréquences, c'est-à-dire de réseaux comprenant des émetteurs cocanaux, émettant tous sur la même fréquence de modulation, chaque émetteur étant vu comme un écho.

Il convient de bien faire la distinction entre les termes "multiporteuse" et "monofréquence", qui ne s'appliquent pas à la même phase de traitement du signal à émettre.

Le signal multiporteuse (17 ; fig.1) correspond au signal utile en bande de base, qui est constitué d'une pluralité de porteuses (21 ; fig.2) modulées chacune par un élément de données. Ce signal en bande de base est ensuite transposé dans le domaine des radiofréquences (18), par multiplication par une fréquence d'émission radiofréquence, en vue de son émission. Le système est dit monofréquence parce que chaque émetteur utilise la même fréquence d'émission.

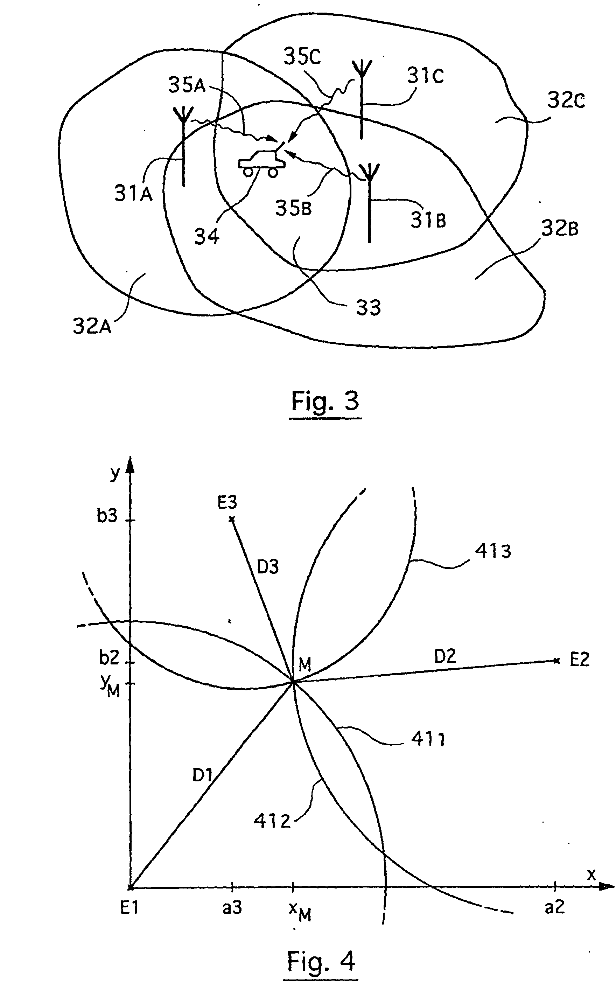

La figure 3 illustre, de façon schématique, le principe de tels réseaux monofréquences. Sur cette figure, on a représenté trois émetteurs $31_A$, $31_B$ et $31_C$, ayant respectivement une couverture géographique $32_A$, $32_B$ et $32_C$. Bien sûr, dans la réalité, le nombre d'émetteurs est beaucoup plus important, et choisi de façon à couvrir un territoire donné.

De façon classique, ces couvertures $32_A$, $32_B$, $32_C$ présentent des zones de recouvrement 33, dans laquelle les signaux émis par au moins deux émetteurs $31_A$ à $31_C$ peuvent être reçus par un récepteur 34. Dans les systèmes de diffusion actuellement mis en oeuvre, il est nécessaire que chaque émetteur ait une fréquence d'émission distincte. Sinon, les deux signaux reçus simultanément par le récepteur 34 se combinent de façon non interprétable.

Au contraire, dans le cas du système COFDM, et plus généralement de tout système capable de fonctionner en présence d'échos, tous les émetteurs peuvent utiliser la même fréquence d'émission. En effet, le récepteur 34 interprète alors les contributions $35_A$ et $35_B$ et $35_C$ des trois émetteurs $31_A$, et $31_B$ et $31_C$ reçues sur son antenne comme autant d'échos naturels, dont il sait tirer parti.

Le principe des réseaux monofréquences revient donc à générer des échos actifs (interprétés comme des échos naturels), à partir d'un ensemble d'émetteurs répartis sur un territoire donné. Outre les avantages évidents qu'apporte cette technique en ce qui concerne notamment l'allocation des ressources (l'attribution d'une fréquence d'émission unique suffit, et le territoire couvert peut être virtuellement étendu indéfiniment), elle apparaît également avantageuse vu des récepteurs, puisque ceux-ci tirent généralement avantage de la présence d'échos.

Selon la technique COFDM connue, les signaux $34_A$, $35_B$ et $35_C$ émis par les trois émetteurs sont tout à fait identiques. Le mobile 34 circulant dans la zone 33 reçoit donc ces trois signaux, mais ne peut en aucun cas distinguer de quel émetteur ils sont issus.

Une caractéristique essentielle de l'invention est au contraire de faire en sorte que le récepteur puisse distinguer l'origine des différents signaux $35_A$ à $35_C$, de façon à pouvoir déterminer la distance le séparant des émetteurs qu'il reçoit, et donc sa position dans l'espace. Bien sûr, cette distinction doit pouvoir être faites sans nuire à la qualité de la réception, ni, de préférence, au débit utile du système.

Il est à noter que ce principe n'est nullement évident pour l'homme du métier. En effet, l'utilisation d'émetteurs cocanaux repose sur l'observation que les échos actifs sont interprétés comme des échos naturels. Pour obtenir ce résultat, l'homme du métier cherche à faire en sorte que les signaux émis par différents émetteurs soient le plus possible identiques, et non identifiables. Au contraire, l'approche de l'invention est tout à fait différente, puisque les émetteurs émettent des symboles d'identification distincts, qui permettent de reconnaître la part du signal reçu issu d'un émetteur donné.

Avant d'expliquer de façon détaillée le procédé permettant de déterminer la distance entre un mobile (récepteur) et un émetteur selon l'invention, on présente rapidement une des méthodes connues en soi permettant de faire le point (c'est-à-dire déterminer une localisation) lorsque plusieurs distances avec des points de référence sont connues.

La figure 4 illustre ainsi le cas d'un mobile M connaissant les trois distances $D_1$, $D_2$ et $D_3$ le séparant respectivement de trois émetteurs $E_1$ à $E_3$. Par simplification, on se limite à une localisation dans un plan (défini par les axes x et y). Il est toutefois aisé de généraliser le principe dans l'espace.

Par ailleurs, toujours pour des raisons de simplification, on se ramène à un repère ayant pour origine l'émetteur $E_1$. Le problème posé revient donc à déterminer la position $(x_M, y_M)$ du point M, connaissant les points $E_1$ (0,0), $E_2$ $(a_2, b_2)$ et $E_3$ $(a_3, b_3)$, ainsi que les distances $D_1$, $D_2$ et $D_3$.

Connaître la distance $D_i$ entre le point M et un émetteur $E_i$ revient à situer ce point M sur un cercle $41_i$ de centre $E_i$ et de rayon $D_i$. Or on sait qu'il existe au plus un point M appartenant à trois cercles distincts (pourvus que leurs trois centres ne soient pas alignés). Il suffit donc de connaître trois distances $D_1$ à $D_3$ pour pouvoir déterminer la position du point M.

Pour obtenir un fonctionnement correct de l'invention, il est donc souhaitable qu'un récepteur reçoive toujours des contributions d'au moins trois émetteurs (ces contributions sont parfois très faibles et très bruitées, mais on verra par la suite que le procédé de l'invention est très résistant au bruit). Les conditions permettant la localisation d'un mobile sont alors remplies.

Cette localisation peut par exemple être calculée de la façon suivante. On considère les équations des trois cercles $41_1$ à $41_3$ auxquels appartient le point M:

$$\text{cercle } 41_1 : x_M{}^2 + y_M{}^2 = D_1{}^2 \tag{1}$$

$$\text{cercle } 41_2 : (x_M - a_2)^2 + (y_M - b_2)^2 = D_2{}^2 \tag{2}$$

$$\text{cercle } 41_3 : (x_M - a_3)^2 + (y_M - b_3)^2 = D_3{}^2 \tag{3}$$

Après développement, les soustractions des équations (1) - (2) et (1) - (3) donnent respectivement :

$$(1) - (2) \qquad 2a_2\, x_M + 2b_2\, y_M = D_1{}^2 - D_2{}^2 + a_2{}^2 + b_2{}^2 = \alpha$$

$$(1) - (3) \qquad 2a_3\, x_M + 2b_3\, y_M = D_1{}^2 - D_3{}^2 + a_3{}^2 + b_3{}^2 = \beta$$

d'où l'on déduit les coordonnées du point M :

$$x_M = b_3\alpha - b_2\beta / 2(a_2b_3 - a_3b_2)$$

$$y_M = a_2\beta - a_2\alpha / 2(a_2b_3 - a_3b_2)$$

D'autres méthodes de triangulation peuvent bien sûr être utilisées. Par ailleurs, le nombre de distances prises en compte peut être différent. En particulier, il peut éventuellement être réduit à deux, si le récepteur prend en compte d'autres informations, telles que des mesures du déplacement du mobile à l'aide de capteurs, ou des informations cartographiques (le récepteur choisissant alors la localisation correspondant à une route, lorsque plusieurs solutions sont possibles). Inversement, plus de trois distances peuvent être prises en compte, pour contrôler et optimiser la localisation (en particulier pour une localisation dans l'espace, et non plus dans le plan).

Selon l'invention, les contributions de chaque émetteur doivent pouvoir être identifiées. Pour ce faire, chacun de ces émetteurs émet régulièrement un symbole d'identification, présentant des caractéristiques propres à cet émetteur.

Les caractéristiques de ce symbole d'identification sont connues de chaque récepteur de radiolocalisation, de façon que celui-ci puisse analyser un symbole d'identification reçu et déterminer la durée, ou le délai, de transmission de ce symbole (cette durée étant bien sûr directement représentative de la distance parcourue).

Un symbole d'identification utilise l'ensemble des fréquences porteuses. Préférentiellement, dans le cas de K émetteurs distincts auxquels sont associés les symboles d'identification $SI_1$ à $SI_K$ respectivement, un symbole $SI_i$ étant composé chacun des éléments de données $ED_{i,j}$, j variant de 1 à N (nombre de porteuses), ces symboles d'identification respecte la condition suivante :

$$\sum_k \sum_{i \neq j} E_{i,k} \times E_{j,k}^* = 0$$

Le principe de l'invention repose donc sur l'émission régulière par chaque émetteur de son symbole d'identification. Par exemple, dans le cas du COFDM, ce symbole est émis une fois par trame.

Un autre aspect nouveau de l'invention est que ces symboles d'identification sont émis simultanément par chacun des émetteurs. Ainsi, un récepteur reçoit un symbole d'identification qui correspond à la superposition de plusieurs symboles émis distincts. Le traitement effectué dans chaque récepteur doit donc être capable de distinguer chaque symbole d'identification émis dans le symbole reçu.

Avantageusement, dans le cas d'un système émettant des trames de symboles telles qu'illustrées en figure 2, le symbole d'identification correspond au symbole nul S1 (dont le rôle premier est la synchronisation des récepteurs). Le cumul des deux fonctions (synchronisation et identification) dans un même symbole permet de ne pas réduire le débit utile. Toutefois, le symbole d'identification peut également être en symbole spécifique, placé à un emplacement quelconque de la trame. Une trame peut aussi, éventuellement, comprendre plusieurs symboles d'identification.

Chaque symbole d'identification étant émis à puissance réduite (dans le cas où on utilise le symbole de synchronisation S1), il ne perturbe pas de façon significative la synchronisation des récepteurs. En effet, ceux-ci détectent l'enveloppe du symbole "nul" S1, et celle-ci reste très faible.

De cette façon, le rôle de synchronisation reste assuré sans problème. Cette diminution d'amplitude est possible car la méthode d'estimation selon l'invention est très robuste vis-à-vis du bruit.

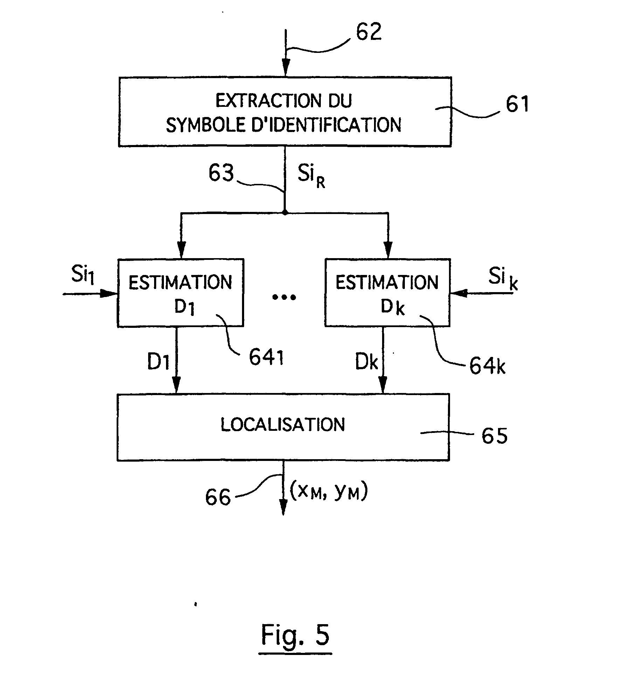

La figure 5 illustre le principe général du traitement effectué dans les récepteurs selon le procédé de l'invention.

Il comprend tout d'abord une étape 61 d'extraction du symbole d'identification de chaque trame 62 (ou au moins de certaines des trames, si par exemple le récepteur fonctionne à un rythme trop lent pour traiter chaque trame, ou si un détecteur d'immobilité du mobile vient inhiber le fonctionnement du récepteur).

Dans le cas où le symbole d'identification est également le symbole de synchronisation, l'étape d'extraction peut être assurée, au moins en partie, lors de la synchronisation, qui consiste notamment en la détection du symbole "nul".

Cette étape 61 d'extraction délivre le symbole d'identification reçu $SI_R$ 63, qui est la combinaison d'au moins trois symboles $SI_1$ et $SI_K$.

Le symbole $SI_R$ 63 est ensuite analysé en parallèle dans K étapes d'estimation $64_1$ à $64_K$ identiques, estimant respectivement les distances $D_1$ à $D_K$ entre le mobile récepteur et K émetteurs distincts.

La corrélation peut être calculée systématiquement pour tous les émetteurs du réseau, ou au moins pour un ensemble d'émetteurs appartenant à une zone géographique donnée, identifiée par le dispositif (par exemple, en milieu urbain, l'analyse sera faite pour tous les émetteurs susceptibles d'être reçus dans la ville concernée).

Dans chaque étape d'estimation $64_1$ à $64_K$, le symbole $SI_R$ est analysé par rapport à chaque symbole d'identification connu $SI_1$ à $SI_K$ respectivement (ces symboles connus étant stockés dans le récepteur, par exemple en mémoire ROM), de façon à estimer le temps de transmission entre chaque émetteur et le mobile. Cette estimation peut par exemple être basée sur un calcul de corrélation, ainsi qu'on le verra par la suite.

Pour des raisons de clarté, les étapes d'estimation sont illustrées sous la forme d'un traitement en parallèle. Le même traitement peut toutefois être effectué séquentiellement, les mêmes moyens analysant K fois le symbole d'identification $SI_R$, en fonction des K symboles connus $SI_1$ à $SI_K$ respectivement.

Chacune des étapes $64_1$ à $64_K$ d'estimation délivre donc une estimation $D_1$ à $D_K$ de la distance entre les différents émetteurs et le mobile (la distance étant directement fonction du temps de propagation). Dans la pratique, on ne conserve que les trois pics de corrélation les plus puissants.

Ces estimations sont utilisées ensuite dans une étape de localisation 65, qui détermine une estimation 66 de la position $(x_M, y_M)$ du mobile, par exemple en appliquant la méthode décrite en relation avec la figure 4, ou toute autre méthode adéquate.

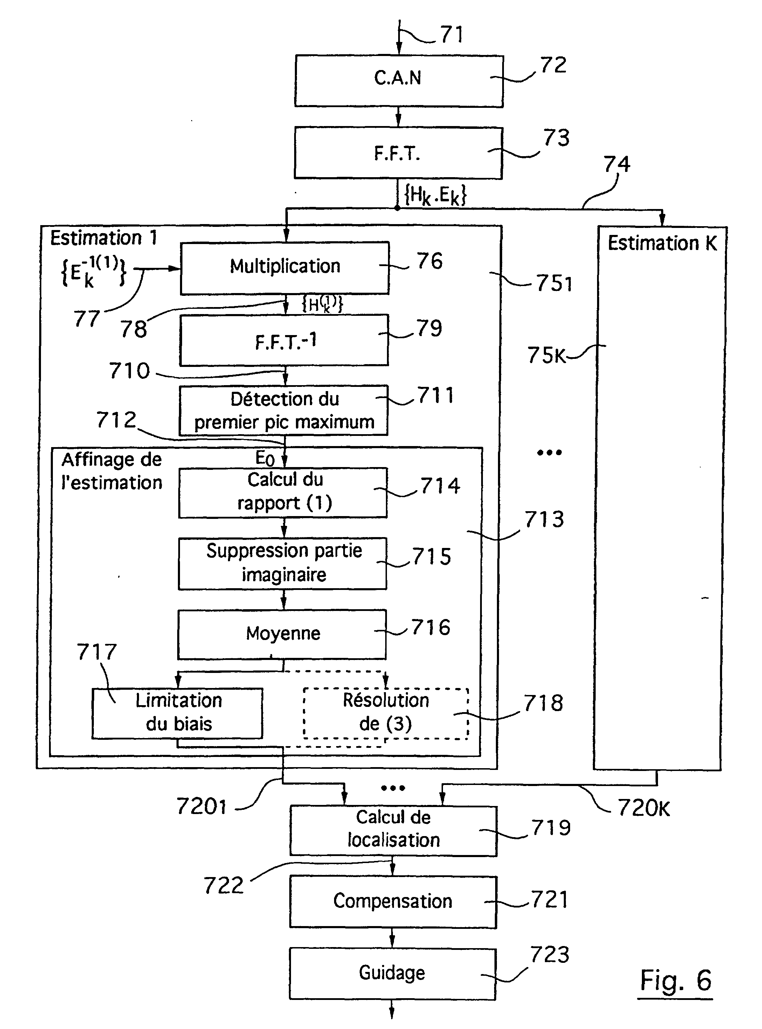

On décrit maintenant plus en détail un mode de réalisation préférentiel du procédé de l'invention, tel qu'illustré par la figure 6.

Ce mode de réalisation s'applique à un système du type des systèmes COFDM, dans lequel le premier symbole de chaque trame est un symbole d'identification selon l'invention.

On pose $\{E_k^{(i)}\}$ la séquence d'éléments de données constituant le symbole d'identification d'un émetteur i, k variant de 0 à N-1, N étant le nombre de fréquences porteuses utilisées par le système.

Cette séquence est bien sûr différente pour chaque émetteur.

Le symbole d'identification 71 reçu par un récepteur est tout d'abord (après transposition en bande de base) soumis à une conversion analogique/numérique 72 (ou échantillonnage) puis à une transformation de Fourier rapide 73 (F.F.T.). Cela correspond au traitement classique de tout symbole reçu.

La transformation de Fourier 73 délivre une séquence d'éléments de données 74 $\{H_k.E_k\}$, où $H_k$ représente la réponse du canal de transmission à la fréquence $f_k$, et $E_k$ représente la superposition des différents $E_k^{(i)}$ correspondant aux différents émetteurs reçus par le récepteur. En d'autres termes, le symbole d'identification reçu comprend les contributions de plusieurs émetteurs, et correspond donc à plusieurs symboles d'identification émis.

Pour mieux faire apparaître le principe d'estimation du délai de transmission selon l'invention, on considère toutefois tout d'abord le cas théorique où le symbole d'identification reçu 74 correspond à un seul symbole émis $\{E_k^{(i)}\}$.

Le récepteur connait la séquence émise $\{E_k^{(i)}\}$. Il peut donc multiplier la séquence reçue 74 $\{H_k.E_k^{(i)}\}$ par la séquence inverse $\{E_k^{-1(i)}\}$. Pour des raisons de simplification évidente, le récepteur a en pratique en mémoire directement la séquence inverse $\{E_k^{-1(i)}\}$, et non la séquence $\{E_k^{(i)}\}$.

Cette multiplication terme à terme permet d'obtenir la séquence $\{H_k\}$ qui est directement représentative de la réponse du canal. Plus précisément, la transformée de Fourier inverse de cette séquence $\{H_k\}$ délivre la séquence $\{h(kT/N)\}$, où $h(t)$ désigne la réponse impulsionnelle du canal, T est la durée utile d'un symbole et N le nombre de fréquences porteuses.

Ce traitement, qui est en fait équivalent à une corrélation dans le domaine temporel, permet d'estimer le retard des différents échos (correspondant à des trajets multiples) pour la transmission du symbole $\{E_k^{(i)}\}$.

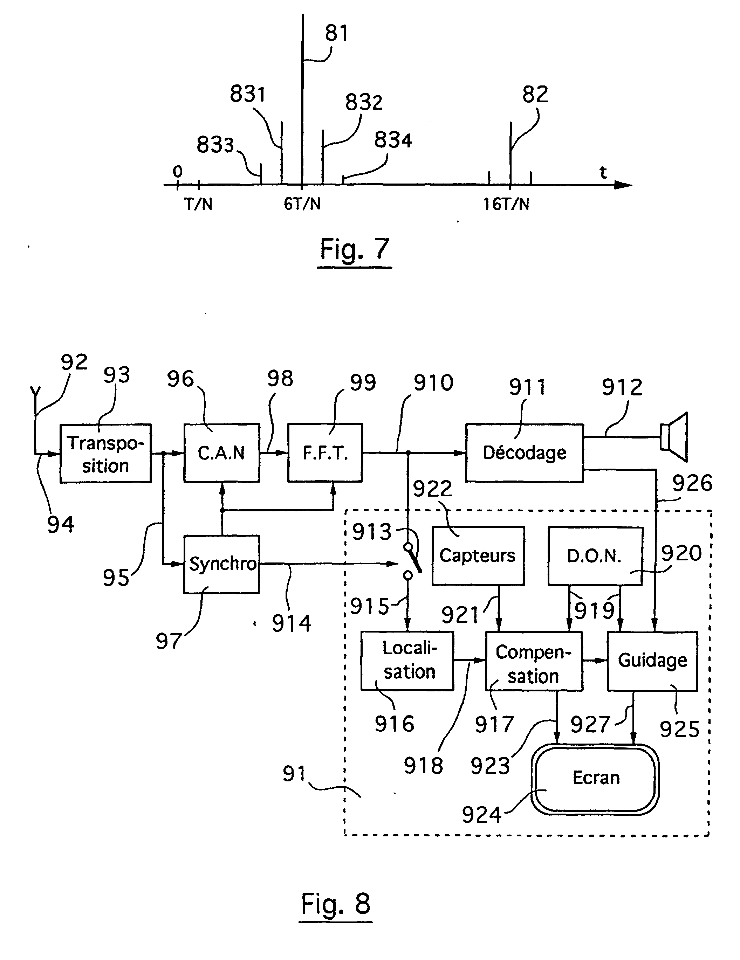

La figure 7 est un exemple simplifié de réponse impulsionnelle du canal, telle qu'obtenue selon cette technique. L'analyse de cette réponse permet de détecter deux pics 81 et 82, qui correspondent à deux trajets distincts.

Plus précisément, le premier pic 81 indique le retard du trajet le plus court (c'est-à-dire, dans la plupart des situations, le trajet direct), et le second pic 82 correspond au retard d'un second trajet. Ainsi, l'analyse de cette réponse impulsionnelle permet de déduire que :

- le trajet le plus court a une durée de l'ordre de 6T/N ;
- le second trajet a une durée de l'ordre de 16T/N.

Ces durées sont obtenues avec une précision de l'ordre de T/N, ou encore 1/B, B étant la largeur de bande totale du signal (T/N = 1/B).

Ce principe peut être généralisé à l'invention. En effet, la corrélation du symbole d'identification reçu avec chaque symbole d'identification susceptible d'être émis permet d'obtenir autant de réponses impulsionnelles correspondant au canal de transmission de chaque émetteur. Les termes supplémentaires dans $\{H_k.E_k\}$ ne correspondant pas à une séquence $\{E_k^{(i)}\}$ donnée peuvent être considérés comme du bruit, et ne perturbent pas sensiblement la réponse impulsionnelle correspondant à cette séquence $\{E_k^{(i)}\}$.

En effet, la séquence délivrée après la multiplication par $\{E_k^{-1(i)}\}$ est :

$$H_k^{(i)} + \sum_{j \neq i} H_k^{(j)}.E_k^{(j)}.E_k^{(i)-1}$$

Seul le terme $H_k^{(i)}$ donne lieu à des pics après la transformation inverse FFT$^{-1}$. La puissance des autres termes est répartie sur l'ensemble des coefficients, et les pics sont aisément, décelables.

Ainsi, selon le procédé de la figure 6, la séquence d'éléments de données du symbole d'identification reçu 74 est transmis à K étapes d'estimation $75_1$ à $75_K$, effectuant chacune en parallèle le même traitement, pour un émetteur donné (sur la figure 6, seul l'étape $75_1$ est détaillée). Bien sûr, à nouveau, le traitement peut également être effectué en série, les distances avec chaque émetteur étant alors estimées les unes après les autres.

L'étape d'estimation $75_1$ comprend donc tout d'abord une étape de multiplication 76 de la séquence 74 $\{H_k.E_k\}$ par la séquence 77 $\{E_k^{-1(i)}\}$, terme à terme, qui délivre la séquence 78 $\{H_k^{(i)}\}$. Cette séquence 78 est alors soumise à une transformation de Fourier inverse 79, délivrant la séquence 710 $\{h^{(i)} (Kt/N)\}$. Cette séquence 78 est alors soumise à une transformation de Fourier inverse 79, délivrant la séquence 710 $\{h^{(i)} (kT/N)\}$.

Le procédé comprend ensuite une étape 711 de recherche du premier pic de corrélation dans la séquence 710 (pic 81 de la figure 7). Cette étape fournit une première estimation $t_0$ 712 du temps de transmission du signal entre l'émetteur $E_1$ et le mobile.

Ainsi qu'on l'a déjà mentionné, la précision de cette estimation $\hat{r}_0$ est de l'ordre de 1/2B. Les ondes se déplaçant avec la célérité de la lumière, la précision spatiale est donc c/2B. Si l'on considère le cas classique d'une bande passante de largeur B = 1,5 MHz, la précision est de l'ordre de $3.10^8/2.1,5.10^6 = 100$ m.

Cette précision peut être suffisante pour certaines applications (correspondant à des récepteurs de radiolocalisation à bas coût). Toutefois, l'invention propose plusieurs caractéristiques optionnelles avantageuses, qui permettent d'améliorer de façon importante cette précision.

Ainsi, le procédé comprend une étape (facultative) 713 d'affinage de l'estimation, comprenant elle-même plusieurs sous-étapes d'affinage successives.

Cette étape 713 d'affinage repose essentiellement sur l'observation qu'un pic de corrélation 81 (fig.8) est en général accompagné de pics latéraux $83_1$, $83_2$, $83_3$ et $83_4$ (de valeurs plus faibles que celle du pic 81).

Plus précisément, si un écho parvient d'un émetteur donné au récepteur avec un retard $\tau = RT/N$, R entier, il se traduira, dans l'estimation de la réponse impulsionnelle, par un pic franc en h(RT/N). Il n'y aura pas de pics latéraux.

Ce cas est rare dans la pratique. Généralement, R n'est pas entier, et on observe également un pic en $h(n_0T/N)$ où $n_0$ désigne l'entier le plus proche de R. Mais ce pic ne sera plus franc : en particulier $h((n_0-1)T/N)$ et $h(n_0+1)T/N)$, quoique d'amplitude plus faible, ne seront pas nuls.

L'étape 711 repose sur la recherche du pic de valeur maximale 81, et les pics latéraux ne sont pas pris en compte. L'invention, en revanche, prend en compte ces pics.

L'analyse de ces pics latéraux $83_1$ à $83_4$, et en particulier des deux pics les plus proches $83_1$ et $83_2$ permet d'estimer le reste $r = R - n_0$, et donc d'améliorer la précision de l'estimation de la durée de transmission.

Ainsi, dans l'exemple de la figure 7, on peut noter que le pic latéral de gauche $83_1$, est de valeur légèrement supérieure à la valeur du pic latéral de droite $83_2$. On peut en déduire que le retard réel est en fait légèrement inférieur à 6T/N.

Cette approche est maintenant décrite de façon plus formelle.

Un écho donné se traduit dans la réponse impulsionnelle du canal par un terme de la forme :

$$h(t) = \delta(t - \frac{n_0+r}{N}.T)$$

où $\delta$ désigne la distribution de Dirac,
la puissance de l'écho étant normalisée à 1 pour simplifier l'écriture.

Dans le domaine fréquentiel, on obtient donc un terme de la forme :

$$H(f) = e^{-2j\pi f\frac{(n_0+r)}{N}} \qquad pour\ 0 \leq k < N$$

soit encore :

$$H(f_k) = H(\frac{k}{T}) = e^{-2j\pi\frac{k(n_0+r)}{N}T} \qquad pour\ 0 \leq k < N$$

La FFT inverse 79 des $H_k = H(f_k)$ donne donc :

$$h_n = h(\frac{nT}{N}) = \sum_{k=0}^{n-1} \frac{e^{-2j\pi k(n_0+r)}}{N} . e^{2j\pi\frac{kn}{N}} = \sum_{k=0}^{N-1} \left(e^{2j\pi\frac{n-n_0-r}{N}}\right)^k$$

soit :

$$h_n = \frac{1 - e^{2j\pi(n-n_0-r)}}{1 - e^{\frac{2j\pi}{N}(n-n_0-r)}} = e^{j\pi(n-n_0-r)} . \frac{\sin(\pi(n-n_0-r))}{\sin\left(\frac{\pi}{N}(n-n_0-r)\right)}$$

En réalité, on obtient la somme de plusieurs termes du type ci-dessus - un pour chaque écho. Néanmoins, le premier écho d'un émetteur donné devant être presque direct pour que la triangulation soit fiable, il dominera nettement les échos secondaires et correspondra effectivement au $h_n$ maximal.

Donc $|h_n|$ est maximal pour $n = n_0$.

Selon l'invention on considère alors $h_{n0}$, mais également $h_{n0+1}$ et $h_{n0-1}$, les pics latéraux (éventuellement, plus de deux pics latéraux peuvent être pris en compte), soit, pour $p \in \{-1, 0,1\}$ :

$$h_{n_0+p} = e^{j\pi(p-r)(1-\frac{1}{N})} . \frac{\sin(\pi(p-r))}{\sin\left(\frac{\pi}{N}(p-r)\right)}$$

N valant typiquement plusieurs centaines, on peut considérer la simplification :

$$h_{n_0+p} \approx e^{j\pi(p-r)} \cdot \frac{\sin(\pi(p-r))}{\frac{\pi}{N}(p-r)}$$

On peut alors calculer le rapport :

$$\hat{r}_0 = \frac{h_{n_0-1} - h_{n_0+1}}{2h_{n_0}} \tag{1}$$

qui, en l'absence de bruit vaut :

$$\hat{r}_0 = \frac{-e^{-j\pi r}\left(\frac{N}{\pi}\cdot\frac{\sin\pi r}{-1-r} - \frac{N}{\pi}\cdot\frac{\sin\pi r}{1-r}\right)}{2e^{-j\pi r}\cdot\frac{N}{\pi}\cdot\frac{\sin\pi r}{r}} = \frac{r}{1-r^2}$$

qui donne une première estimation $\hat{r}_0$ de r (r étant inférieur à 1/2, $1-r^2$ est peu différent de 1).

Cela correspond à l'étape 714 de calcul du rapport (1), qui peut délivrer une estimation plus précise de la durée de transmission $t_1 = t_0 + r_0$.

Toutefois, dans la pratique, on constate que l'estimation $\hat{r}_0$ peut être affectée par un terme de bruit, qui en limite la précision et y ajoute un terme imaginaire. Pour pallier cet inconvénient, on peut prévoir une étape 715 de suppression de la partie imaginaire (qui ne provient que du bruit). Cela consiste en fait à conserver uniquement la partie réelle de l'expression (1).

Dans la pratique, on calculera directement, au lieu de (1), l'expression suivante :

$$\hat{r}_0 = \frac{Re\{(h_{n_0-1} - h_{n_0+1}).h_{n_0}^*\}}{2|h_{n_0}|^2}$$

Toujours dans l'objectif de limiter les effets du bruit, il est avantageux de calculer une moyenne 716 de $\hat{r}_0$, sur plusieurs ($N_s$) symboles consécutifs, de la façon suivante :

$$\hat{r} = \frac{\sum_{i=1}^{N_s} Re\{(h_{n_0-1}^{(i)} - h_{n_0+1}^{(i)}).h_{n_0}^{(i)*}\}}{2\sum_{i=1}^{N_s} |h_{n_0}^{(i)}|^2} \tag{2}$$

où $\{h_n^{(i)}\}$ est la séquence obtenue à partir du symbole i.

Il est souhaitable de tenir compte du plus grand nombre possible de symboles. Cela est peu coûteux en temps de calcul et en place mémoire, puisqu'il suffit de réactualiser les moyennes du numérateur et du dénominateur, et donc de mémoriser les différents numérateurs $N_i$ ( $N_i = Re(h_{n0-1}^{(i)}-h_{n0+1}^{(i)}).h_{n0}^{(i)}$) et dénominateurs $D_i$ ( $D_i = |h_{n0}^{(i)}|$ ).

Il ne faut toutefois pas que les données mémorisées les plus anciennes ($N_{i-Ns}$ ou $D_{i-Ns}$) soient obsolètes. Si $\tau_t$ est le temps trame, v la vitesse du véhicule et $\delta$ la précision requise, le nombre maximal de symboles pris en compte est :

$$N_{smax} = \delta/(v.\tau_t).$$

En milieu urbain, $N_s$ = 5 est une valeur acceptable. Une valeur de $N_s$ de 10 ou plus est souhaitable, moyennant une correction prenant en compte une information représentative de la vitesse du véhicule.

Par ailleurs, il apparaît que cette estimation est biaisée, par la présence du dénominateur $(1-r^2)$. Son biais croît avec r : il est nul pour r = 0 et maximal lorsque r tend vers 1/2. Il vaut alors :

$$\varepsilon_{max} = \frac{1}{2} \cdot \left( \frac{1}{1 - \left(\frac{1}{2}\right)^2} - 1 \right) = \frac{1}{6}$$

En retirant $\in_{max}/2$ = 1/12 à l'estimation (2) (étape 717), on limite la valeur absolue du biais à 1/12. Il en résulte une erreur spatiale de c/12B, soit environ 12m.

Cette précision permet une localisation très fine, et supérieure à celle obtenue à l'aide des techniques connues.

Elle peut toutefois encore être améliorée en remplaçant l'étape de limitation du biais 717 par une étape alternative 718 (représentée en pointillé) de résolution de l'équation du second degré en x suivante :

$$\frac{x}{1 - x^2} = \hat{r} \qquad (3)$$

Le biais est alors nul et la précision n'est plus limitée que par le terme de bruit. Celui-ci peut être rendu arbitrairement petit en moyennant sur un grand nombre de symboles, c'est-à-dire en augmentant $N_s$.

A nouveau, le nombre $N_s$ de symboles d'identification pris en compte permet de définir plusieurs niveaux de qualité de récepteurs. Bien sûr, $N_s$ ne doit toutefois pas être trop grand, les symboles les plus anciens devenant obsolètes du fait du déplacement du mobile. Les récepteurs haut de gamme peuvent comprendre des moyens de pondération favorisant les symboles d'identification les plus récents. Ils peuvent également inclure des moyens de variation du nombre $N_s$, par exemple en fonction de la qualité du signal reçu, du niveau de bruit, de la vitesse de déplacement du mobile,...

Après l'affinage de l'estimation 713, chaque étape d'estimation $75_1$ à $75_K$ délivre à une étape 719 de calcul de localisation une estimation de la durée de transmission $720_1$ à $720_K$ (ou une estimation de la distance correspondante, obtenue directement par multiplication de la durée de la transmission par la célérité de la lumière).

Le calcul de localisation 719 est un calcul de triangulation classique, tel que déjà discuté.

Le procédé peut ensuite comprendre une étape 721 de compensation, ou de correction, de la localisation 722, à partir d'informations diverses, telles que par exemple :

- des données cartographiques stockées par le récepteur, par exemple sur disque optique numérique (D.O.N). Le récepteur peut notamment alors vérifier que le mobile se trouve bien sur une route ou une rue, et suit celle-ci ;
- des données mesurées par des capteurs mesurant en particulier la vitesse du mobile, son déplacement ou ses changements de direction, de façon à vérifier la cohérence des calculs de localisation successifs.

Enfin le procédé de l'invention peut comprendre une étape complémentaire de guidage 723, proposant par exemple un itinéraire à suivre pour atteindre un objectif fixé. Ce guidage peut notamment tenir compte de données cartographiques, ainsi que de données émises, par exemple pour signaler des bouchons, des travaux... Ces données peuvent être émises dans l'un des canaux du signal reçu.

La figure 8 présente le schéma synoptique d'un exemple de récepteur de radiolocalisation mettant en oeuvre le procédé décrit ci-dessus. Une des particularités avantageuses de ce récepteur est qu'il partage une partie de ces moyens de réception avec un récepteur de radiodiffusion COFDM classique, ce qui permet d'en réduire le coût. Sur la figure 8, les moyens spécifiques à la radiolocalisation correspondent au cadre en pointillé 91. Les autres moyens appartiennent classiquement à un récepteur de radiodiffusion.

Ainsi, le signal émis est reçu sur une antenne 92 (ou éventuellement plusieurs antennes). Des moyens 93 de transposition du signal reçu 94 du domaine des radiofréquences en un signal 95 en bande de base délivre ce signal 95 d'une part à un convertisseur analogique / numérique 96, et d'autre part à des moyens 97 de synchronisation analogique.

Ces moyens 97 de synchronisation recherche notamment le symbole nul S1 de début de trame, par détection d'enveloppe. Le fonctionnement détaillé de ces moyens de synchronisation (prenant en compte également un second symbole de synchronisation S2) est présenté dans le brevet français FR 88 15216 déjà cité.

Les symboles reçus 98 échantillonnés par le CAN 96 sont délivrés à un module 99 de transformation de Fourier rapide (F.F.T.), délivrant les séquences d'éléments de données 910 correspondant à chaque symbole. Ces séquences 910 sont ensuite décodées, dans un module de décodage 911, correspondant aux modules 112, 114, 116 et 117 de la figure 1.

Le module de décodage 911 peut notamment délivrer un signal sonore 912, correspondant à l'un des programmes émis.

Par ailleurs, les moyens de synchronisation 97 contrôlent des moyens 913 d'extraction du symbole d'identification reçu, à l'aide d'un signal de commande 914 indiquant le début de trame. Le symbole d'identification 915 est délivré à des moyens 916 de calcul de localisation, qui effectuent le traitement correspondant aux étapes 76, 79, 711, 713 et 719 de la figure 6.

Avantageusement, le récepteur de radiolocalisation comprend des moyens 917 de compensation de l'estimation de localisation 918, qui tiennent compte d'informations cartographiques 919 contenues dans un disque optique 920. Il peut également tenir compte d'informations de déplacement, de vitesse ou de changement de direction 921, délivrés par un système 922 de capteurs (de tels capteurs équipent déjà souvent les véhicules, par exemple pour le contrôle des systèmes de freinage ou d'anti-patinage). Après compensation, la localisation 923 peut être affichée sur un écran de visualisation 924.

Par ailleurs, le récepteur peut comprendre des moyens 925 de radioguidage, tenant compte des informations 919 contenues dans le disque optique 920, et éventuellement d'informations particulières 926 émises dans un canal spécifique, délivré par le module de décodage 911. Les données de radioguidage 927 peuvent être affichées sur l'écran 924, ou restituées selon tout autre moyen, tel que la synthèse vocale.

Ainsi qu'on l'a déjà précisé, plusieurs niveaux de qualité de récepteurs peuvent être définis (correspondant à plusieurs niveaux de précision), en particulier en fonction des choix suivants :

- présence ou non d'une étape d'affinage de l'estimation
- limitation du biais d'estimation ou résolution de l'équation (3) ;
- nombre de symboles d'identification pris en compte dans la moyenne ;
- compensation du calcul de localisation ;

L'invention s'applique particulièrement à la radiolocalisation terrestre, et en particulier routière, ainsi qu'on l'a déjà précisé. Elle est notamment tout à fait adaptée à la localisation et au guidage en milieu urbain, du fait de la présence de nombreux émetteurs dans ces zones.

Toutefois, l'invention peut trouver d'autres applications dans de nombreux autres domaines, dès lors que le récepteur reste à portée de plusieurs émetteurs. Ainsi, elle peut être utilisée pour la navigation maritime à proximité des côtes (cabotage), la navigation fluviale ou portuaire, la localisation en forêts et autres milieux naturels,..

**Revendications**

1. Procédé de radiolocalisation d'un mobile (34), à l'aide d'un système multiporteuse de radiodiffusion de signaux source numériques (19; $35_A$, $35_B$, $35_C$), lesdits signaux source (19 ; $35_A$, $35_B$, $35_C$) étant codés sous la forme d'une succession de symboles de données (S1 à SM) répartis chacun sur une pluralité (21) de fréquences porteuses, chacun desdits symboles correspondant à une séquence d'éléments de données modulant chacun sélectivement une desdites fréquences porteuses,

   lesdits symboles (S1 à SM) étant ensuite émis sur une même fréquence d'émission par au moins deux émetteurs cocanaux ($31_A$, $31_B$, $31_C$) géographiquement distincts, ledit mobile (34) recevant simultanément des signaux ($35_A$, $35_B$, $35_C$) émis par au moins deux desdits émetteurs cocanaux ($31_A$, $31_B$, $31_C$), dits émetteurs locaux, chaque symbole reçu (fig.7) par ledit mobile (34) correspondant à la combinaison des symboles émis par lesdits émetteurs locaux ($31_A$, $31_B$, $31_C$),

   procédé **caractérisé en ce que** chacun desdits émetteurs ($31_A$, $31_B$, $31_C$) émet périodiquement, à des instants d'émission communs à tous lesdits émetteurs, un symbole d'identification présentant des caractéristiques qui lui sont propres, lesdites caractéristiques étant connues dudit mobile,

   et **en ce que** ledit mobile (34) effectue un traitement (fig.5 ; fig.6) d'au moins certains desdits symboles d'identification comprenant les étapes suivantes :

   - réception (61) d'un symbole d'identification ($SI_R$), le symbole d'identification reçu correspondant à la combinaison d'au moins deux symboles d'identification distincts ($SI_1$ à $SI_K$) émis par lesdits émetteurs locaux ;
   - estimation ($64_1$ à $64_K$ ; $75_1$ à $75_K$) des distances ($D_1$ à $D_K$ ; $720_1$ à $720_K$) entre ledit mobile (34) et au moins deux desdits émetteurs locaux ($31_A$, $31_B$, $31_C$) par estimation du délai de transmission d'au moins deux symboles d'identification ($SI_1$ à $SI_K$) émis par au moins deux desdits émetteurs locaux ($31_1$, $31_2$, $31_3$) et combinés dans ledit symbole d'identification reçu ($SI_R$), à partir d'une analyse dudit symbole d'identification reçu ($SI_R$) en fonction desdites caractéristiques connues des symboles d'identification correspondants ($SI_1$ à $SI_K$) ;

- détermination (65 ; 719) d'une estimation (66 ; 722) de la localisation géographique dudit mobile (34), en fonction desdites distances estimées ($D_1$ à $D_K$ ; $720_1$ à $720_K$).

2. Procédé selon la revendication 1, **caractérisé en ce que**, dans ladite étape d'estimation ($64_1$ à $64_K$ ; $75_1$ à $75_K$) des distances ($D_1$ à $D_K$ ; $720_1$ à $720_K$), l'estimation du délai de transmission d'un symbole d'identification émis ($SI_1$ à $SI_R$) par un émetteur ($31_1$, $31_2$, $31_3$) comprend une étape (711, 713) d'analyse de la réponse impulsionnelle (710 ; fig.7) du canal de transmission correspondant audit émetteur.

3. Procédé selon l'une quelconque des revendications 1 et 2, **caractérisé en ce que** ladite étape ($64_1$ à $64_K$ ; $75_1$ à $75_K$) d'estimation des distances ($D_1$ à $D_K$ ; $720_1$ à $720_K$) comprend les étapes suivantes :

- conversion analogique/numérique (72) d'un symbole d'identification reçu (71), ladite conversion (72) délivrant une série d'échantillons numériques représentatifs dudit symbole d'identification reçu (71) ;
- transformation mathématique (73) de ladite série d'échantillons numériques, ladite transformation mathématique (73) délivrant une séquence (714) d'éléments de données reçus correspondant audit symbole d'identification reçu (71) ;

et pour chacune desdites distances ($D_1$ à $D_K$ ; $720_1$ à $720_K$) entre ledit mobile (34) et un émetteur donné ($31_i$) :

- multiplication (76) de ladite séquence (714) d'éléments de données reçus par une séquence de référence (77), ladite séquence de référence (77) étant connu dudit mobile (34) et égale à la séquence inverse de la séquence correspondant au symbole d'identification ($SI_i$) dudit émetteur donné ($31_i$) ;
- transformation mathématique inverse (79) du résultat (78) de ladite multiplication (76), ladite transformation mathématique inverse (79) délivrant une série (710 ; fig.7) de pics de corrélation ;
- détection (711) du pic de corrélation (712; 81) de valeur maximale dans ladite série (710) de pics de corrélation, la position dudit pic (81) de valeur maximale correspondant à une estimation du délai de transmission entre ledit mobile (34) et ledit émetteur donné ($31_i$) ;
- détermination (713) d'une estimation ($720_1$ à $720_K$) de la distance entre ledit mobile (34) et ledit émetteur donné ($31_i$), à partir de ladite estimation ($720_1$ à $720_K$) du délai de transmission.

4. Procédé selon l'une des revendications 1 à 3, **caractérisé en ce que** lesdits symboles ($SI_1$ à $SI_K$) d'identification sont émis avec une puissance d'émission très inférieure à la puissance d'émission des autres symboles de données.

5. Procédé selon l'une quelconque des revendications 1 à 4, **caractérisé en ce que** lesdits symboles d'identification ($SI_1$ à $SI_K$) sont également des (S1) symboles de synchronisation analogique, lesdits symboles de synchronisation analogique correspondant à des débuts de trames constituées chacune d'un nombre prédéfini de symboles (S1 à SM).

6. Procédé selon l'une quelconque des revendications 3 à 5, **caractérisé en ce qu'**il comprend de plus une étape (713) d'affinage de ladite estimation ($720_1$ à $720_K$) du délai de transmission, ladite étape (713) d'affinage tenant compte de la valeur dudit pic de valeur maximale (81) et de la valeur d'au moins un des pics adjacents ($83_1$ à $81_4$) audit pic de valeur maximale (81).

7. Procédé selon la revendication 6, **caractérisé en ce que** ladite étape (713) d'affinage comprend une étape (714) de calcul d'un rapport pondéré de valeurs d'un jeu de pics de corrélation incluant ledit pic de valeur maximale (81) et au moins un des pics adjacents ($83_1$ à $83_4$) audit pic de valeur maximale (81).

8. Procédé selon la revendication 7, **caractérisé en ce que** ladite étape (714) de calcul consiste à calculer le rapport suivant :

$$r_0 = \frac{h_{n_0-1} - h_{n_0+1}}{2h_{n_0}}$$

où :

h$_{n0}$ est la valeur complexe dudit pic de corrélation de valeur maximale ;

h$_{n0-1}$ et h$_{n0+1}$ sont les valeurs complexes des deux pics de corrélation précédant et suivant respectivement le pic de valeur h$_{n0}$.

9. Procédé selon l'une quelconque des revendications 1 à 8, **caractérisé en ce que** ladite étape (713) d'estimation des distances comprend une étape (715) de limitation de l'importance du bruit de transmission perturbant lesdites estimations, consistant à supprimer le terme imaginaire dans chacune desdites estimations ($720_1$ à $720_K$).

10. Procédé selon l'une quelconque des revendications 1 à 9, **caractérisé en ce que** ladite étape (713) d'estimation ($720_1$ à $720_K$) des distances comprend une étape (716) de calcul d'une moyenne de chacune desdites estimations sur au moins deux symboles d'estimation reçus consécutifs.

11. Procédé selon l'une quelconque des revendications 6 à 10, **caractérisé en ce que** ladite étape (713) d'affinage comprend une étape (717) de soustraction systématique d'une valeur prédéfinie de limitation du biais de ladite estimation du délai de transmission.

12. Procédé selon les revendications 8 et 11, **caractérisé en ce que** ladite valeur de limitation du biais est égale à 1/12.

13. Procédé selon la revendication 8, **caractérisé en ce qu'**il comprend une étape (718) de résolution de l'équation :

$$\frac{x}{1 - x^2} = r$$

où :

r est une première estimation dudit délai de transmission ;

x est la variable de ladite équation,

une des racines de ladite équation étant une seconde estimation dudit délai de transmission.

14. Procédé selon l'une quelconque des revendications 1 à 13, **caractérisé en ce que** ladite étape (719) de détermination d'une estimation (722) de la localisation géographique comprend une étape de triangulation (fig.4), ladite étape de triangulation délivrant une estimation (722) de la localisation géographique dudit mobile (34 ; M) à partir d'estimations ($720_1$ à $720_K$, $D_1$, $D_2$, $D_3$) des distances entre ledit mobile (34) et au moins trois émetteurs locaux distincts ($31_1$, $31_2$, $31_3$ ; $E_1$, $E_2$, $E_3$).

15. Procédé selon l'une quelconque des revendications 1 à 14, **caractérisé en ce que** ladite étape de détermination d'une estimation de la localisation géographique comprend une étape (721) de compensation prenant en compte au moins une des informations suivantes :

- information sur le déplacement du mobile (34), délivrée par au moins un capteur embarqué ;
- information cartographique, mémorisée par ledit mobile (34).

16. Dispositif de radiolocalisation mettant en oeuvre le procédé de radiolocalisation selon l'une quelconque des revendications 1 à 15.

17. Emetteur d'un système multiporteuse de radiodiffusion de signaux source numériques émettant régulièrement un symbole d'identification tel que défini dans l'une quelconque des revendications 1 à 15.

**Patentansprüche**

1. Funkortungsverfahren eines beweglichen Gegenstandes (34) mit Hilfe eines Funk-Vielträgersystems für digitale Quellensignale (19; 35$_A$, 35$_B$, 35$_C$), wobei diese Quellensignale (19; 35$_A$, 35$_B$, 35$_C$) in der Form einer Folge von Datensymbolen (S1 bis SM) kodiert sind, die jeweils über eine Mehrzahl (21) von Trägerfrequenzen verteilt sind, wobei jedes der Symbole einer Folge von Datenelementen entspricht, die jeweils eine der Trägerfrequenzen selektiv modulieren,

wobei die Symbole (S1 bis SM) dann über eine gleiche Sendefrequenz durch mindestens zwei an verschiedenen geographischen Orten befindlichen Kokanalsender ($31_A$, $31_B$, $31_C$) gesendet werden, wobei der bewegliche Gegenstand (34) gleichzeitig Signale ($35_A$, $35_B$, $35_C$) empfängt, die von mindestens zwei der lokalen Sender genannte Kokanalsender ($31_A$, $31_B$, $31_C$) gesendet werden, wobei jedes der vom beweglichen Gegenstand (34) empfangene Symbol (Fig. 7) der Kombination von Symbolen entspricht, die von den Lokalsendem ($31_A$, $31_B$, $31_C$) gesendet werden;

das Verfahren ist **dadurch gekennzeichnet, dass** jeder dieser Sender ($31_A$, $31_B$, $31_C$) periodisch und zu allen Sendern gemeinsamen Sendezeitpunkten ein Identifizierungssymbol sendet, welches für den jeweiligen Sender typische Eigenschaften aufweist und wobei diese Eigenschaften dem beweglichen Gegenstand bekannt sind,

und dadurch, dass der bewegliche Gegenstand (34) eine Verarbeitung (Fig. 5; Fig. 6) von mindestens einigen der Identifizierungssymbole durchführt, welche die folgenden Schritte umfasst:

- Empfang (61) eines Identifizierungssymbols ($SI_R$), wobei das empfangene Identifizierungssymbol der Kombination von mindestens zwei verschiedenen von den Lokalsendem gesendeten Identifizierungssymbolen ($SI_1$ bis $SI_K$) entspricht;

- Abschätzen ($64_1$ bis $64_K$; $75_1$ bis $75_K$) der Entfemungen ($D_1$ bis $D_K$; $720_1$ bis $720_K$) zwischen dem beweglichen Gegenstand (34) und mindestens zwei der Lokalsender ($31_A$, $31_B$, $31_C$) durch Abschätzen der Sendelaufzeit von mindestens zwei Identifizienungssymbolen ($SI_1$ bis $SI_K$), die von mindestens zwei der Lokalsender ($31_1$, $31_2$, $31_3$) gesendet werden und im empfangenen Identifizierungssymbol ($SI_R$) kombiniert werden, ausgehend von einer Analyse des empfangenen Identifizierungssymbols ($SI_R$), als Funktion der bekannten Eigenschaften der entsprechenden Identifizierungssymbole ($SI_1$ bis $SI_K$);

- Feststellen (65; 719) einer Bewertung (66; 722) der geographischen Ortung des beweglichen Gegenstandes (34), als Funktion der abgeschätzten Entfemungen ($D_1$ bis $D_K$; $720_1$ bis $720_K$).

2. Verfahren nach Anspruch 1, **dadurch gekennzeichnet, dass** beim Schritt zum Schätzen ($64_1$ bis $64_K$; $75_1$ bis $75_K$) der Entfemungen ($D_1$ bis $D_K$; $720_1$ bis $720_K$), das Abschätzen der Sendelaufzeit eines gesendeten Identifizierungssymbols ($SI_1$ bis $SI_R$) durch einen Sender ($31_1$, $31_2$, $31_3$) einen Schritt (711, 713) zum Analysieren der Impulsantwort (710, Fig. 7) des dem betroffenen Senders entsprechenden Sendekanals umfasst.

3. Verfahren nach einem der Ansprüche 1 und 2, **dadurch gekennzeichnet, dass** der Schritt ($64_1$ bis $64_K$; $75_1$ bis $75_K$) zum Abschätzen der Entfemungen ($D_1$ bis $D_K$; $720_1$ bis $720_K$) die folgenden Schritte umfasst:

- analog/digital Umwandlung (72) eines empfangenen Identifizierungssymbols (71), wobei die Umwandlung (72) eine Reihe von digitalen Abtastwerten liefert, die für das empfangene Identifizierungssymbol (71) repräsentativ sind;

- mathematische Transformation (73) der Reihe von digitalen Abtastwerten, wobei diese mathematische Transformation (73) eine Folge (714) von empfangenen Datenelementen liefert, die dem empfangenen Identifizierungssymbol (71) entsprechen;

und dass für jede Entfemung ($D_1$ bis $D_K$; $720_1$ bis $720_K$) zwischen dem beweglichen Gegenstand (34) und einem gegebenen Sender ($31_i$) folgendes erfolgt:

- Multiplizieren (76) der Folge (714) der empfangenen Elemente mit einer Referenzfolge (77), wobei diese Referenzfolge (77) dem beweglichen Gegenstand (34) bekannt ist und der umgekehrten Folge gleicht, die dem Identifizierungssymbol ($SI_i$) des gegebenen Senders ($31_i$) entspricht;

- mathematische Umkehrtransformation (79) des Ergebnisses (78) der Multiplikation (76), wobei diese mathematische Umkehrtransformation (79) eine Reihe (710; Fig. 7) von Korrelationsscheitelpunkten liefert;

- Erfassen (711) des Korrelationsscheitelpunktes (712; 81) mit dem höchsten Wert in der Reihe (710) von Korrelationsscheitelpunkten, wobei die Position des Scheitelpunktes (81) mit dem höchsten Wert einer Abschätzung der Sendelaufzeit zwischen dem beweglichen Gegenstand (34) und dem gegebenen Sender ($31_i$) entspricht;

- Festlegung (713) einer Abschätzung ($720_1$ bis $720_K$) der Entfernung zwischen dem beweglichen Gegenstand (34) und dem gegebenen Sender ($31_i$), ausgehend von der Abschätzung ($720_1$ bis $720_K$) der Sendelaufzeit.

4. Verfahren nach einem der Ansprüche 1 bis 3, **dadurch gekennzeichnet, dass** die Identifizierungssymbole ($SI_1$ bis $SI_K$) mit einer Sendeleistung gesendet werden, die weit unterhalb der für das Senden der anderen Datensymbole verwendeten Sendeleistung liegt.

5. Verfahren nach einem der Ansprüche 1 bis 4, **dadurch gekennzeichnet, dass** die Identifizierungssymbole ($SI_1$ bis $SI_K$) ebenfalls Symbole (S1) analoger Synchronisierung sind, wobei diese Symbole analoger Synchronisierung Anfängen von Datenübertragungsrahmen entsprechen, die jeweils aus einer vorgegebenen Zahl von Symbolen (S1 bis SM) gebildet werden.

6. Verfahren nach einem der Ansprüche 3 bis 5, **dadurch gekennzeichnet, dass** es zusätzlich einen Schritt (713) zum Verfeinern der Abschätzung ($720_1$ bis $720_K$) der Sendelaufzeit umfasst, wobei der Verfeinerungsschritt (713) den Wert des Scheitelpunktes, der dem höchsten Wert (81) entspricht und den Wert von mindestens einem der mit diesem Scheitelpunkt für den höchsten Wert (81) benachbarten Scheitelpunkte ($83_1$ bis $81_4$) berücksichtigt.

7. Verfahren nach Anspruch 6, **dadurch gekennzeichnet, dass** der Verfeinerungsschritt (713) einen Schritt (714) zum Berechnen eines gewichteten Verhältnisses eines Satzes von Korrelationsscheitelpunktwerten umfasst, die den Scheitelpunkt für den höchsten Wert (81) und mindestens einen Scheitelpunkt ($83_1$ bis $81_4$) umfassen der zu diesem Scheitelpunkt für den höchsten Wert (81) benachbart ist.

8. Verfahren nach Anspruch 7, **dadurch gekennzeichnet, dass** der Berechnungsschritt (714) darin besteht, das folgende Verhältnis zu berechnen:

$$r_0 = \frac{h_{n_0-1} - h_{n_0+1}}{2h_{n_0}}$$

wobei:

$h_{n0}$ der komplexe Wert des Korrelationsscheitelpunktes für den Höchstwert ist;
$h_{n0-1}$ und $h_{n0+1}$ die komplexen Werte der zwei Korrelationsscheitelpunkte sind, die jeweils vor und nach dem Scheitelpunkt mit dem Wert $h_{n0}$ liegen.

9. Verfahren nach einem der Ansprüche 1 bis 8, **dadurch gekennzeichnet, dass** der Schritt (713) zum Abschätzen der Entfernungen einen Schritt (715) zum Begrenzen des Senderauschens umfasst, das diese Abschätzungen beeinträchtigt, wobei dieser Schritt in Eliminieren des imaginären Terms aus diesen Abschätzungen ($720_1$ bis $720_K$) besteht.

10. Verfahren nach einem der Ansprüche 1 bis 9, **dadurch gekennzeichnet, dass** der Schritt (713) zum Abschätzen ($720_1$ bis $720_K$) der Entfernungen einen Schritt (716) zum Berechnen eines Mittelwertes für eine jede dieser Abschätzungen über mindestens zwei aufeinanderfolgende empfangene Abschätzungssymbole umfasst.

11. Verfahren nach einem der Ansprüche 6 bis 10, **dadurch gekennzeichnet, dass** der Verfeinerungsschritt (713) einen Schritt (717) umfasst, bei dem systematisch ein vorgegebener Wert zur Begrenzung der systematischen Beurteilungsabweichung von der Abschätzung der Sendelaufzeit subtrahiert wird.

12. Verfahren nach den Ansprüchen 8 und 11, **dadurch gekennzeichnet, dass** der Wert für die Begrenzung der systematischen Beurteilungsabweichung gleich 1/12 ist.

13. Verfahren nach Anspruch 8, **dadurch gekennzeichnet, dass** es einen Schritt (718) umfasst, der die folgende Gleichung löst:

$$\frac{x}{1 - x^2} = r$$

wobei:

r eine erste Abschätzung der Sendelaufzeit ist;
x die Variable der Gleichung ist,

wobei eine der Wurzeln der Gleichung eine zweite Abschätzung der Sendelaufzeit ist.

14. Verfahren nach einem der Ansprüche 1 bis 13, **dadurch gekennzeichnet, dass** der Schritt (719) zum Feststellen einer Abschätzung (722) der geographischen Ortung einen Triangulierungsschritt umfasst (Fig. 4), wobei dieser Triangulierungsschritt eine Abschätzung (722) der geographischen Ortung des bewegten Gegenstandes (34; M) liefert, ausgehend von Abschätzungen ($720_1$ bis $720_K$; $D_1$, $D_2$, $D_3$) der Entfernungen zwischen dem bewegten Gegenstand (34) und mindestens drei verschiedenen Lokalsendern ($31_1$, $31_2$, $31_3$; $E_1$, $E_2$, $E_3$).

15. Verfahren nach einem der Ansprüche 1 bis 14, **dadurch gekennzeichnet, dass** der Schritt zum Feststellen einer Abschätzung der geographischen Ortung einen Kompensierungsschritt (721) umfasst, der mindestens eine der folgenden Informationen enthält:

- Information über die Ortsveränderung des beweglichen Gegenstandes (34), die von mindestens einem mitgenommenen Fühler geliefert wird;

- kartographische Information, die im beweglichen Gegenstand (34) gespeichert ist.

16. Funkortungsvorrichtung, die das Funkortungsverfahren nach einem der Ansprüche 1 bis 15 anwendet.

17. Sender eines Mehrfachträger-Funksystems für digitale Quellensignale, der regelmäßig ein Identifizierungssymbol gemäß einem der Ansprüche 1 bis 15 sendet.

**Claims**

1. Process for radiolocation of a mobile radio station (34), with the aid of a multicarrier radio broadcasting system with digital source signals (19; $35_A$, $35_B$, $35_C$), said source signals (19; $35_A$, $35_B$, $35_C$) being coded in the form of a sequence of data digits (S1 to SM), each spread over a number of (21) carrier frequencies, each of said digits corresponding to a sequence of data elements, each selectively modulating one of said carrier frequencies, said digits (S1 to SM) then being transmitted on an identical transmitting frequency by at least two geographically separated, co-channel transmitters ($31_A$, $31_B$, $31_C$), said mobile radio station (34) simultaneously receiving signals ($35_A$, $35_B$, $35_C$) transmitted by at least two of said co-channel transmitters ($31_A$, $31_B$, $31_C$), termed local transmitters, each digit received (Fig. 7) by said mobile radio station (34) corresponding to the combination of the digits transmitted by said local transmitters ($31_A$, $31_B$, $31_C$) ;
process **characterised in that** each one of said transmitters ($31_A$, $31_B$, $31_C$) transmits periodically, at transmission intervals common to all said transmitters, an identification digit having its own unique characteristics, said characteristics being known to said mobile radio station,
and **in that** said mobile radio station (34) carries out a processing operation (Fig. 5; Fig. 6) on at least certain of said identification digits, comprising the following steps:

- receipt (61) of an identification digit ($SI_R$), the received identification digit corresponding to the combination of at least two separate identification digits ($SI_1$ to $SI_K$) transmitted by said local transmitters;
- estimation ($64_1$ to $64_K$; $75_1$ to $75_K$) of the distances ($D_1$ to $D_K$; $720_1$ to $720_K$) between said mobile radio station (34) and at least two of said local transmitters ($31_A$, $31_B$, $31_C$) by estimation of the time to transmit at least two identification digits ($SI_1$ to $SI_K$) transmitted by at least two of said local transmitters ($31_1$, $31_2$, $31_3$) and combined in said received identification digit ($SI_R$), from an analysis of said received identification digit ($SI_R$) according to said known characteristics of the corresponding identification digits ($SI_1$ to $SI_K$);
- determination (65; 719) of an estimation (66; 722 of the geographical position of said mobile radio station (34) according to said estimated distances ($D_1$ to $D_K$; $720_1$ to $720_K$).

2. Process according to Claim 1, **characterised in that** in said step ($64_1$ to $64_K$; $75_1$ to $75_K$) for estimating the distances ($D_1$ to $D_K$; $720_1$ to $720_K$), the estimation of the time to transmit an identification digit ($SI_1$ to $SI_R$) by a transmitter ($31_1$, $31_2$, $31_3$) includes a step (711, 713) for analysing the pulse response (710; Fig. 7) of the transmission channel corresponding to said transmitter.

3. Process according to any one of Claims 1 and 2, **characterised in that** said step ($64_1$ to $64_K$; $75_1$ to $75_K$) for estimating the distances ($D_1$ to $D_K$; $720_1$ to $720_K$) includes the following steps:

   - analogue/digital conversion (72) of a received identification digit (71), said conversion (72) supplying a series of digital samples that are representative of said received identification digit (71);
   - mathematical transformation (73) of said series of digital samples, said mathematical transformation (73) supplying a sequence (714) of received data elements corresponding to said received identification digit (71) ; and for each of said distances ($D_1$ to $D_K$; $720_1$ to $720_K$) between said mobile radio station (34) and a given transmitter ($31_i$) :

   - multiplication (76) of said sequence (714) of received data elements by a reference sequence (77), said reference sequence (77) being known by said mobile radio station (34) and equal to the inverse sequence of the sequence corresponding to the identification digit ($SI_i$) of said given transmitter ($31_i$) ;
   - inverse mathematical transformation (79) of the result (78) of said multiplication (76), said inverse mathematical transformation (79) supplying a series (710; Fig. 7) of correlation peaks;
   - detection (711) of the maximum value of the correlation peak (712; 81) in said series (710) of correlation peaks, the position of said maximum value peak (81) corresponding to an estimation of the transmission time between said mobile radio station (34) and said given transmitter ($31_i$);
   - determination (713) of an estimation ($720_1$ to $720_K$) of the distance between said mobile radio station (34) and said given transmitter ($31_i$), from said estimation ($720_1$ to $720_K$) of the transmission time.

4. Process according to any one of Claims 1 to 3, **characterised in that** said identification digits ($SI_1$ to $SI_K$) are transmitted with a transmitted power that is much lower than the transmitted power of the other data digits.

5. Process according to any one of Claims 1 to 4, **characterised in that** said identification digits ($SI_1$ to $SI_K$) are also analogue synchronisation digits (S1), said analogue synchronisation digits corresponding to starts of frames, each consisting of a predetermined number of digits (S1 to SM).

6. Process according to any one of Claims 3 to 5, **characterised in that** it further comprises a step (713) for refining said estimation ($720_1$ to $720_K$) of the transmission time, said refining step (713) taking account of the value of said maximum value peak (81) and of the value of at least one of the peaks ($83_1$ to $81_4$) adjacent to said maximum value peak (81).

7. Process according to Claim 6, **characterised in that** said refining step (713) includes a step (714) for calculating a weighted factor of values of a set of correlation peaks including said maximum value peak (81) and at least one of the peaks ($83_1$ to $83_4$) of said maximum value peak (81).

8. Process according to Claims 7, **characterised in that** said calculation step (714) consists in calculating the following ratio:

$$r_0 = \frac{h_{n0-1} - h_{n0+1}}{2h_{n0}}$$

where:

   $h_{n0}$ is the complex value of said maximum value correlation peak;
   $h_{n0-1}$ and $h_{n0+1}$ are the complex values of the two correlation peaks preceding and following, respectively, the peak with the value $h_{n0}$.

9. Process according to any one of Claims 1 to 8, **characterised in that** said step (713) for estimating distances includes a step (715) for limiting the magnitude of the transmission noise impairing said estimations, consisting in suppressing the imaginary term in each of said estimations ($720_1$ to $720_K$).

10. Process according to any one of Claims 1 to 9, **characterised in that** said step (713) for estimating distances ($720_1$ to $720_K$) includes a step (716) for calculating an average of each of said estimations of at least two consecutively received estimation digits.

**11.** Process according to any one of Claims 6 to 10, **characterised in that** said refining step (713) includes a step (717) for the systematic subtraction of a predetermined value for limiting the bias of said estimation of the transmission time.

**12.** Process according to Claims 8 and 11, **characterised in that** said
bias limiting value is equal to 1/12.

**13.** Process according to Claim 8, **characterised in that** it includes a step (718) for solving the equation:

$$\frac{x}{1 - x^2} = r$$

where:

    r is a first estimation of said transmission time;
    x is the variable of said equation,
    one of the roots of said equation being a second estimation of said transmission time.

**14.** Process according to any one of Claims 1 to 13, **characterised in that** said step (719) for determining an estimation (722) of the geographical position includes a triangulation step (Fig. 4), said triangulation step supplying an estimation (722) of the geographical position of said mobile radio station (34;M) from estimations ($720_1$ to $720_K$; $D_1$, $D_2$, $D_3$) of the distances between said mobile radio station (34) and at least three separate local transmitters ($31_1$, $31_2$, $31_3$; $E_1$, $E_2$, $E_3$).

**15.** Process according to any one of Claims 1 to 14, **characterised in that** said step for determining an estimation of the geographical position includes a compensation step (721) taking into account at least one of the following pieces of information:

-     information on the movement of the mobile radio station (34) supplied by at least one on-board sensor;
-     cartographic information stored by said mobile radio station (34).

**16.** Radiolocation device implementing the radiolocation process according to any one of Claims 1 to 15.

**17.** Transmitter of a multicarrier radio broadcasting system with digital source signals, regularly transmitting an identification digit as defined in any one of the Claims 1 to 15.

EP 0 613 021 B1

Fig. 1

Fig. 2

## Fig. 3

## Fig. 4

EP 0 613 021 B1

Fig. 5

26

Fig. 6

Fig. 7

Fig. 8